(19) Europäisches Patentamt / European Patent Office / Office européen des brevets

(11) **EP 3 489 591 B1**

(12) **EUROPEAN PATENT SPECIFICATION**

(45) Date of publication and mention
of the grant of the patent:
**01.09.2021 Bulletin 2021/35**

(21) Application number: **18201194.0**

(22) Date of filing: **18.10.2018**

(51) Int Cl.:
*F24F 11/46* (2018.01)          *F28F 27/00* (2006.01)
*G05D 23/19* (2006.01)          *F24F 11/00* (2018.01)
*G01K 17/10* (2006.01)

(54) **SMART THERMAL ENERGY EXCHANGER**

INTELLIGENTER WÄRMEENERGIETAUSCHER

ÉCHANGEUR D'ÉNERGIE THERMIQUE INTELLIGENT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **24.11.2017 EP 17203553**

(43) Date of publication of application:
**29.05.2019 Bulletin 2019/22**

(73) Proprietor: **Siemens Schweiz AG
8047 Zürich (CH)**

(72) Inventor: **Gwerder, Markus
6312 Steinhausen (CH)**

(74) Representative: **Maier, Daniel Oliver
Siemens AG
Postfach 22 16 34
80506 München (DE)**

(56) References cited:
**JP-A- H08 327 124       US-A1- 2013 261 808
US-A1- 2016 054 741**

**Description**

Background

The present invention relates to a control system and to a computer program product for efficient operation of a thermal energy exchanger. More particularly, the present invention focuses on a thermal energy exchanger such as a cooling coil for a heating, air-conditioning and / or ventilation (HVAC) system.

A thermal energy exchanger transfers thermal energy between a first fluid flowing in a primary circuit and a second fluid flowing in a secondary circuit. Water or a mixture thereof is commonly employed as the first fluid. The second fluid frequently is air.

The transfer of thermal energy between the primary side and the secondary side depends on a plethora of factors such as supply temperatures on the primary side and on the secondary side. The transfer of heat is also influenced by the volume and / or mass flow of the two fluids. If the secondary side fluid is humid air, the transfer of thermal energy also depends on the humidity of the air entering the heat exchanger. That is, heat transfer depends on humidity of the fluid on the secondary side. It is, however, known that the heat transferred versus volume and / or mass flow shows asymptotic behavior. That is, increases in flow at some point no longer significantly increase heat transfer.

The patent application WO2017/036674A1 was filed on 25 July 2016 and was published on 9 March 2017. WO2017/036674A1 discloses a method and a system for operating a thermal energy exchanger. WO2017/036674A1 teaches recording measured data sets representing heat transfer and flow through a thermal energy exchanger. These data sets are normalized. A transfer curve of the thermal energy exchanger is then determined based on the measured and normalized data.

The PCT patent application WO2013/034358A1 was filed on 25 July 2012 and was published on 14 March 2013. WO2013/034358A1 is about a method for operating and / or monitoring a system for heating, air-conditioning and / or ventilation. According to WO2013/034358A1, measurements of supply temperature and of return temperature as well as of volume flow are taken. A transfer of energy is determined from these measured values. A curve representing heat transfer versus flow is then empirically determined by associating flow values with values of heat transfer.

A paper titled improving campus chilled water systems with intelligent control valves: a field study was published by G HENZE, W HENRY, and M THUILLARD at the Architectural Engineering Conference. The conference took place at the State College of Pennsylvania from 3 April to 5 April 2013. The paper deals with the mitigation of ∆T degradation issues obtained from employing pressure-independent control valves on two university campuses.

A report titled optimization of chilled water systems using a Belimo energy valve™: a case study in the tropics, was authored by B SESHADRI, V PARTENAY, E BLONKOWSKI, N JADHAV, M THUILLARD, S MISCHLER, and F REIDER. The report was published by the Energy Research Institute of Nanyang Technological University in 2015. Details are provided on energy savings due to a valve with monitoring and logging capabilities. To that end, an air handling unit was provided with such a valve. The measure yielded reductions in volume flow through the air handling unit as well as mitigated ∆T degradation.

A patent application WO2014183868A2 was filed on 14 May 2014 and was published on 20 November 2014. WO2014183868A2 claims priority of a Swiss patent application 00975/13 of 16 May 2013. WO2014183868A2 teaches a device and a method for controlling the opening of a valve in a HVAC system.

The present invention improves on thermal energy exchangers of HVAC installations. The invention aims at benefits from determining and employing characteristic transfer functions and / or curves of thermal energy exchangers.

Summary

The present invention provides a method of operating a thermal energy exchanger according to claim 1 and / or a computer program product for operating a thermal energy exchanger according to claim 12. The thermal energy exchanger comprises a primary circuit with a supply end and with a return end. A first fluid flows through the primary circuit. The thermal energy exchanger also comprises a secondary circuit with a supply end and with a return end. A second fluid flows through the secondary circuit. A plurality of sensors detects signals indicative of temperatures at the supply end and / or at the return end of the first circuit and / or of the second circuit. At least one flow sensor detects signals indicative of flow through the first circuit and / or through the second circuit. The above procedure is repeated several times and an empirical characteristic transfer function with a plurality of associated values of heat transfer is formed.

The method of operating the thermal energy exchanger and / or the computer program product according to the invention yields data required to inhibit excessive flow through the conduits of the thermal energy exchanger. In so doing, the power intake of any fluid conveyor that produces flow through the thermal energy exchanger is reduced. The thermal energy exchanger and / or the computer program product thus delivers savings in terms of energy. Fluid conveyors such as pumps with rotating parts are generally prone to (mechanical) wear. Mechanical wear often worsens in a non-linear fashion with fluid throughput. The thermal energy exchanger and / or the computer program product inhibits excessive flow and hence minimizes wear. In addition, a heating, ventilation and / or air conditioning system comprising the fluid conveyor becomes more robust and less prone to failure.

It is a related object of the instant disclosure to provide a thermal energy exchanger and / or a computer program product wherein, if the signal obtained from the flow sensor indicates no flow or flow below a predetermined threshold, the signal will be cancelled. Likewise, a zero difference or a difference below a predetermined threshold between temperatures indicated at the supply end and at the return end entails cancellation of the signals. In the absence of abandonment, the signals are processed into measurements and a value of heat transfer is determined from the measurements and / or from the signals. If the value of heat transfer is zero or is below a predetermined threshold, the computed value will be abandoned. The determined value of heat transfer is otherwise associated with its flow value.

It is a related object of the instant disclosure to provide a thermal energy exchanger and / or a computer program product wherein flow signals and / or values of heat transfer and / or temperature signals are checked for stationary behavior. Processing of these signals and / or values continues in case of stationary behavior.

It is also a related object of the instant disclosure to provide a thermal energy exchanger and / or a computer program product wherein flow signals and / or values of heat transfer and / or temperature signals are averaged over time. It is envisaged that averaging involves calculation of a moving average. It is also envisaged that a weighted average is determined.

The present disclosure also provides a thermal energy exchanger and / or a computer program product wherein a learning algorithm such as a neural network and / or least square fitting and / or least square surface fitting and / or Marquardt-Levenberg gradient descent and / or multi-dimensional Marquardt-Levenberg gradient descent is employed to determine a characteristic transfer function from the determined empirical values. In an embodiment, the learning algorithm weights empirical values. A set of empirically determined values that was determined a long time ago advantageously weights less than a recently determined set of values. Also, a set of empirically determined values that is close to many other sets of empirically determined values weights less than a set of empirically determined values that is close to only few sets of empirically determined values.

It is another related object of the present disclosure to provide a thermal energy exchanger and / or a computer program product with connectivity to a system controller. Upon determination of the characteristic transfer function, the thermal energy exchanger and / or the computer program product forwards the characteristic transfer function to the system controller. The system controller ideally communicates with a plurality of thermal energy exchangers and / or computer program products. The system controller then sets parameters of a heating, air-conditioning, and / or ventilation system of a structure in accordance with the characteristic transfer function received from the thermal energy exchanger and / or the computer program product. These parameters include, but are not limited to, maximum capacities of central fluid conveyors (pumps), set point temperatures, target values for humidity and / or latent heat etc.

The instant disclosure also provides a thermal energy exchanger and / or a computer program product wherein a validity check of the determined characteristic transfer function is carried out. It is envisaged that the validity check involves checking whether parameters of the characteristic transfer function are within predetermined limits. It is also envisaged that the validity check compares the determined characteristic transfer function to a previously determined characteristic transfer function thereby tracking changes. An error signal will be generated if the parameters are off limits or if the deviation between the characteristic transfer function and the previously determined characteristic transfer function exceeds a predetermined limit.

According to an aspect, the thermal energy exchanger and / or the computer program product upon generation of the error signal produces an error message. The error message is advantageously forwarded to a mobile (handheld) device. To that end, the thermal energy exchanger and / or the computer program product has got connectivity to the mobile (handheld) device. According to another aspect, the thermal energy exchanger and / or the computer program product upon generation of the error signal switches to a fallback mode of operation. The fallback mode of operation ensures safe operation. According to yet another aspect, the thermal energy exchanger and / or the computer program product upon generation of the error signal produces and / or transmits a lockout signal. The lockout signal prevents and / or inhibits operation of the thermal energy exchanger and / or of the computer program product.

The present disclosure also provides a thermal energy exchanger and / or a computer program product wherein determining the characteristic transfer function involves training a neural network. It is envisaged to employ techniques such as backpropagation training and / or genetic training algorithms and / or reinforced learning and / or deep learning to train the neural network.

The instant disclosure further provides a thermal energy exchanger and / or a computer program product with connectivity to an application-specific integrated circuit (ASIC). It is envisaged to employ the ASIC to determine the characteristic transfer function. The computing capacity of the ASIC ideally exceeds the computing capacity of any other processor installed at or near the thermal energy exchanger at least by a factor 5, preferably at least by a factor 10 (in terms of floating point operations per second).

The present disclosure still further provides a thermal energy exchanger and / or a computer program product with connectivity to a field programmable gate array (FPGA). It is envisaged to employ the FPGA to determine the characteristic transfer function. The computing capacity of the FPGA ideally exceeds the computing capacity of any other processor installed at or near the thermal energy exchanger at least by a factor 5, preferably at least by a factor 10 (in terms of floating point operations per second).

The instant disclosure also provides a thermal energy exchanger and / or a computer program product with connectivity to a cloud computer. It is envisaged to determine the characteristic transfer function on the cloud computer. The cloud computer advantageously comprises a plurality of processors. The plurality of processors installed on the cloud computer exceeds the computing capacity of any processor installed at or near the thermal energy exchanger at least by a factor 5, preferably at least by a factor 10 (in terms of floating point operations per second).

The present disclosure further provides a circuit for heating, cooling, air-conditioning and / or ventilation that comprises a thermal energy exchanger and / or a computer program product in accordance with the instant disclosure.

Brief description of the drawings

Various features will become apparent to those skilled in the art from the following detailed description of the disclosed non-limiting embodiments. The drawings that accompany the detailed description can be briefly described as follows:

FIG 1 is a schematic view of a thermal energy exchanger.

FIG 2 is graph displaying a characteristic transfer function.

FIG 3 shows a psychrometric graph.

FIG 4 is a graph of a neural network employed for training purposes.

Detailed decription

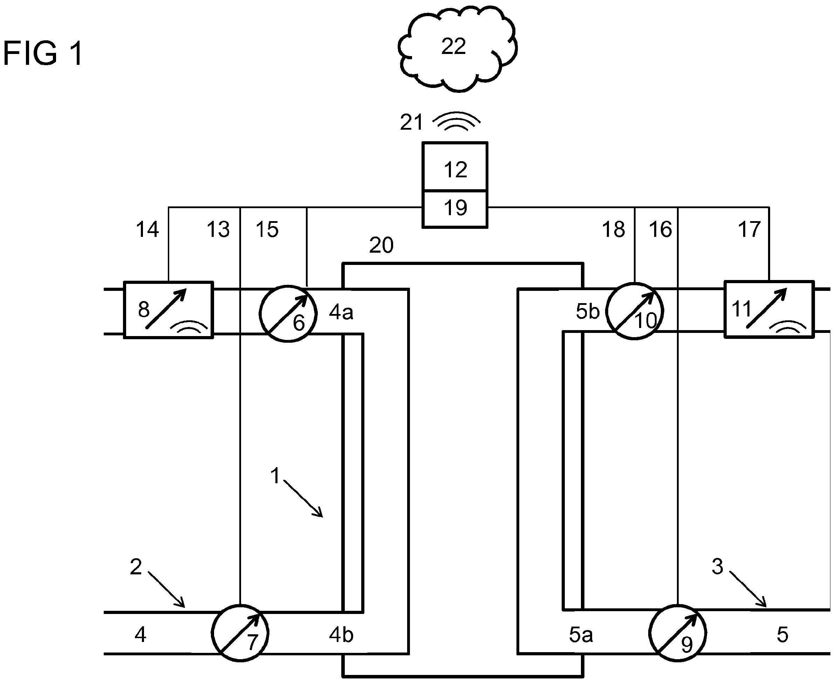

The thermal energy exchanger of the instant disclosure typically is part of an air handling unit and / or a fan coil unit. In a particular embodiment, the thermal energy exchanger is a cooling coil. FIG 1 shows a thermal energy exchanger 1 with a primary circuit 2 and with a secondary circuit 3. The coil shown on FIG 1 provides a primary circuit 2 and a secondary circuit 3. Coils are also envisaged that provide additional circuits.

Each circuit 2, 3 provides a conduit 4 and or duct 5. A first fluid such as air or water or glycol or a blend thereof flows between the inlet 4a and the outlet 4b of first conduit 4. The first fluid may, by way of non-limiting example, also be a R-401A, R-404A, R-406A, R-407A, R-407C, R-408A, R-409A, R-410A, R-438A, R-500, or a R-502 refrigerant. A first fluid path is thus established between the inlet 4a and the outlet 4b of first conduit 4. A second fluid such as air or water or glycol or a blend thereof also flows between the inlet 5a and the outlet 5b of second duct 5. The second fluid may, by way of non-limiting example, also be a R-401A, R-404A, R-406A, R-407A, R-407C, R-408A, R-409A, R-410A, R-438A, R-500, or a R-502 refrigerant. A second fluid path is thus established between the inlet 5a and the outlet 5b of second duct 5.

Each circuit 2, 3 may comprise a plurality of sensors. FIG 1 depicts a supply sensor 6 such as a temperature sensor or a humidity sensor or a combined temperature and humidity sensor arranged at or near the inlet 4a of conduit 4. FIG 1 also depicts a return sensor 7 such as a temperature sensor or a humidity sensor or a combined temperature and humidity sensor arranged at or near the outlet 4b of conduit 4. FIG 1 further depicts a supply sensor 9 such as a temperature sensor or a humidity sensor or a combined temperature and humidity sensor arranged at or near the inlet 5a of duct 5.FIG 1 also depicts a return sensor 10 such as a temperature sensor or a humidity sensor or a combined temperature and humidity sensor arranged at or near the outlet 5b of duct 5.

Each circuit 2, 3 may also comprise a flow sensor. FIG 1 depicts a flow sensor 8 of primary circuit 2 such as an ultrasonic sensor or a vortex sensor or a mass flow sensor. In an embodiment, sensor 8 is affixed to and / or mounted to and / or secured relative to duct 4. According to a particular embodiment, sensor 8 is arranged outside the fluid path of conduit 4. That is, (ultrasonic) flow sensor 8 does not penetrate the fluid path. According to an alternate embodiment, (mass) flow sensor 8 is, at least in part or even fully, arranged inside the fluid path of duct 4. If the (mass) flow sensor 8 is arranged at least in part inside the fluid path, the (mass) flow sensor 8 will have a first portion inside the fluid path and a second portion outside the fluid path.

FIG 1 also shows a flow sensor 11 of secondary circuit 3 such as an ultrasonic sensor or a vortex sensor or a mass flow sensor. In an embodiment, sensor 11 is affixed to and / or mounted to and / or secured relative to duct 5. According to a particular embodiment, sensor 11 is arranged outside the fluid path of duct 5. That is, (ultrasonic) flow sensor 11 does not penetrate the fluid path. According to an alternate embodiment, (mass) flow sensor 11 is, at least in part or even fully, arranged inside the fluid path of duct 5. If the (mass) flow sensor 11 is arranged at least in part inside the fluid path, the (mass) flow sensor 11 will have a first portion inside the fluid path and a second portion outside the fluid path.

Sensors such as mass flow sensors 8 and 11 enable measurements of large flow velocities. They confer benefits in terms of wide measurement ranges. These benefits are particularly relevant to thermal exchangers in operation. Typical values of measured flow velocities are within the ranges from 0.1 m/sec to 5 m/sec, to 10 m/sec, to 15 m/sec, to 20 m/sec, or even to 100 m/sec. Suitable mass flow sensors for the instant disclosure are, by way of non-limiting examples, OMRON® D6F-W or type SENSOR TECHNICS® WBA sensors. The useful range of such sensors typically starts at velocities between 0.01 m/sec and 0.1 m/sec and ends at velocities such as 5 m/sec, 10 m/sec, 15 m/sec, 20 m/sec, or even 100 m/sec. In other words, lower limits of flow velocities such as 0.1 m/sec can be combined with upper limits such as 5 m/sec, 10 m/sec, 15 m/sec, 20 m/sec, or even 100 m/sec.

The thermal energy exchanger also comprises a controller 12. Controller 12 may, by way of non-limiting example, be a processor or a microprocessor or a microcontroller. Controller 12 advantageously comprises a memory, preferably a non-volatile memory. Controller 12 may also connect to a memory, preferably to a non-volatile memory, such that controller 12 may read data from the (non-volatile) memory and / or write data to the (non-volatile) memory.

Controller 12 and / or any of the sensors 6-11 can be supplied with electric energy from an energy harvesting device. To that end, an energy harvesting device such as a device harnessing the Seebeck effect is interposed between ducts 4 and 5. The Seebeck device converts a small fraction such as less than 0.1 Watts, less than 0.01 Watts or even less than 0.001 Watts of the heat transferred between ducts 4 and 5 into electric energy. By electrically connecting the energy harvesting device to controller 12 and / or to any of the sensors 6 - 11, these components may be supplied with electric energy. The skilled person also envisaged an energy buffer such as a (rechargeable) battery connected in parallel with the energy harvesting unit. That way, the energy buffer inhibits interruptions of power supply to components 6 - 12, 19. An energy harvesting circuit harnessing the Seebeck effect may also be disposed in between the inlet and the outlet of primary duct 4 or of secondary duct 5.

Controller 12 connects to the sensors 6 - 11 via suitable busses 13 - 18. Suitable busses 13 - 18 include, but are not limited to, wireless busses and / or hard-wired busses 13 -18. In a particular embodiment, power-over-ethernet cables such as twisted-pair CAT-5 or CAT-6 cables are employed to connect sensors 6 - 11 to controller 12. That way, controller 12 may supply sensors 6 - 11 with (electric) energy and at the same time read signals and / or data from sensors 6 - 11. In a particular embodiment not shown on FIG 1, controller 12 connects to sensors 6 - 11 via a daisy-chained bus, preferably via a daisy-chained power-over-ethernet bus. The skilled person chooses a suitable protocol such as a predetermined digital protocol for connections 13 - 18.

According to an aspect, controller 12 connects to sensors 6 - 11 via suitable connections 13 - 18 and via analog-to-digital converter 19. The skilled person chooses an analog-to-digital converter 19 with suitable resolution and with suitable clock rate. Analog-to-digital converter 19 may, in particular, comprise a multiplexer in order to serially process signals from all the lines 13 - 18. It is envisaged that analog-to-digital converter 19 is an integral part of controller 12. That is, analog-to-digital converter 19 and controller 12 are arranged on the same chip and / or on the same die. It is also envisaged that analog-to-digital 19 converter provides delta-sigma modulation.

Controller 12 might be affixed to or mounted to or secured relative to an enclosure 20 of coil 1. In an alternate embodiment, controller 12 is disposed in a control cubicle and connects to sensors 6- 11 via suitable bus connectors. Sensors 6 - 11 may also be affixed to or mounted to or secured relative to enclosure 20. It is envisaged that enclosure 20 and / or any of the ducts 4, 5 and / or any cubicles are manufactured using additive manufacturing such as three-dimensional printing.

In a practical scenario, the local computing capacity and / or the local storage capacity of controller 12 may be limited. That is why controller 12 ideally provides connectivity 21 to connect controller 12 to one or several cloud computer(s) 22. Connection 21 between controller 12 and / or cloud sever 22 preferably employs a transmission control protocol / internet protocol (TCP/IP) connection. According to a particular aspect, traffic along connection 21 follows a connectionless protocol. Connection 21 may also employ a user datagram protocol (UDP) connection.

A suitable wireless or hard-wired bus is employed for connection 21. Controller 12 may, for instance, connect to cloud server 22 via wireless local area network (WLAN) and / or via a Zigbee® wireless connection and / or via a telephony (global systems for mobile communications, GSM) network and / or via a proprietary wireless technique. In a particular embodiment, thermal energy exchanger 1 is installed remotely from cloud computer 22. Also, a concrete wall with high attenuation of radio frequency signals may separate coil 1 and cloud computer 22. In order to overcome issues due to noise and / or attenuation, controller 12 and / or cloud computer 22 may harness techniques such as phase-shift keying and / or redundant datagram packets of limited size.

Data traffic via connection 21 is preferably encrypted. In a sophisticated embodiment, a Diffie-Hellman key exchange is employed to encrypt traffic along connection 21. In a very sophisticated embodiment, the Diffie-Hellman key exchange involves elliptic curves.

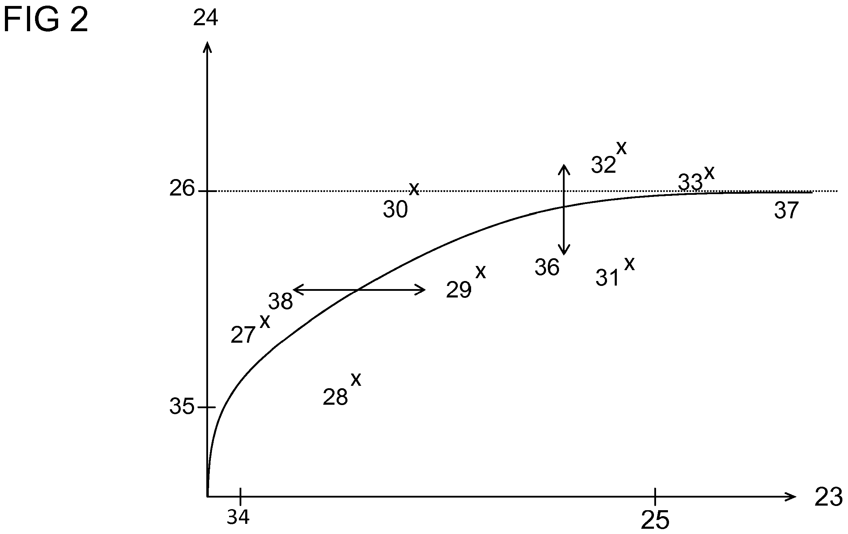

Now referring to FIG 2, a graph is shown of normalized flow 23 versus heat transfer effectiveness 24. The thermal energy exchanger 1 of FIG 1 may provide signals indicative of normalized flow 23 via flow sensors 8 and / or 11. These signals correspond to flows through primary conduit 4 and / or through secondary duct 5. The obtained signals are then forwarded to the controller 12 via signal lines 14 and / or 17. Controller 12 processes the signals obtained from the flow sensors 8 and / or 11 and produces flow values associated with flows through ducts 4 and / or 5. It is envisaged that controller 12 also writes such flow values to a memory, in particular to a non-volatile memory. The skilled person understands that the measured values of flow may correspond to volume flow or to mass flow depending on instrumentation.

In an embodiment, analog signals indicative of flow are first received by analog-to-digital converter 19, then processed into digital representations by analog-to-digital converter 19 and finally forwarded to controller 12. In an alternate embodiment, sensors 8 and / or 11 deliver digital signals that need not be processed by analog-to-digital converter 19. The digital signals are then ideally directly processed by controller 12.

The thermal energy exchanger 1 of FIG 1 may also provide signals indicative of supply temperatures and return temperatures via sensors 6 and / or 7 and / or 9 and / or 10. These signals correspond to temperatures at or near the inlets and at or near the outlets of primary conduit 4 and / or of secondary duct 5. The obtained signals are then forwarded to the controller 12 via signal lines 13 and 15 and / or 16 and 18. Controller 12 processes the signals obtained from the temperature probes 6 and 7 and / or 9 and 10 and produces temperature values associated with fluids at or near the inlets and at or near the outlets of ducts 4 and / or 5. It is envisaged that controller 12 also writes such temperature values to a memory, in particular to a non-volatile memory.

In an embodiment, analog signals indicative of temperature are first received by analog-to-digital converter 19, then processed into digital representations by analog-to-digital converter 19 and finally forwarded to controller 12. In an alternate embodiment, sensors 6 and 7 and / or 9 and 10 deliver digital signals that need not be processed by analog-to-digital converter 19. The digital signals are then ideally directly processed by controller 12.

Controller 12 determines heat $Q_{4/5}$ transferred via any of the primary and / or secondary conduit 4 / duct 5 using the relationship

$$Q_{4/5} = \text{const.} \cdot \varphi_{4/5} \cdot (E_{supply,4/5} - E_{return,4/5}) \ ,$$

wherein $\varphi_{4/5}$ denotes the flow of a fluid through conduit 4 and / or duct 5, $E_{supply,4/5}$ denotes the supply enthalpy indicated by sensors 6 and / or 9 of conduit 4 and / or duct 5, and $E_{return,4/5}$ denotes the return enthalpy indicated by sensors 7 and / or 10 of conduit 4 and / or duct 5. The constant in the above equation represents a specific coefficient and depends on the type of fluid circulating through primary conduit 4 and / or secondary duct 5. According to an aspect, controller 12 comprises an arithmetic logical unit ALU to carry out the above calculations.

It is envisaged that controller 12 comprises a non-volatile memory with a lookup table of specific coefficients. Controller 12 looks up an entry associated with a particular type of fluid and retrieves the specific energy coefficient of the particular fluid from the lookup table.

In a practical embodiment, the constant may as well be set to 1. In so doing, the impact of specific coefficients on heat transfer is disregarded. The same assumption is justified whenever the purpose of the above calculation is determination of a characteristic transfer function rather than exact knowledge of the amounts of energy involved. By setting const. = 1, the shape of the characteristic transfer function is not affected. The characteristic transfer function is thus determined except for a scale factor 36. For many practical applications, that scale factor 36 bears little or no effect.

**Flow normalization variant 1: primary side flow normalized by secondary side flow**

The values of flow $\varphi_{4/5}$ may actually be normalized individually or normalized to one common normalized flow. A combined normalized flow might be defined as the division of the primary side flow by the secondary side flow

$$\varphi_{norm,4/5} = \varphi_4 / \varphi_5 \ .$$

**Flow normalization variant 2: flows normalized separately by nominal flows**

The values of flow $\varphi_{4/5}$ may also be normalized separately. A practical way of normalizing flow is achieved by dividing flow by its nominal value. A normalized value of flow $\varphi_{norm,4}$ through conduit 4 thus reads

$$\varphi_{norm,4} = \varphi_4 / \varphi_{nom,4} \ ,$$

a normalized value of flow $\varphi_{nom,5}$ through duct 5 thus reads

$$\varphi_{norm,5} = \varphi_5 / \varphi_{nom,5} \quad,$$

wherein $\varphi_{nom,4}$ and $\varphi_{nom,5}$ denote nominal flows through conduit 4 and duct 5. It is envisaged that controller 12 comprises a non-volatile memory and reads values of nominal flows $\varphi_{nom,4/5}$ from its memory. A supplier of the thermal heat exchanger 1 may, for instance, store values of nominal flow $\varphi_{nom,4/5}$ in the memory of controller 12 during manufacture and / or commissioning.

**Heat exchanger effectiveness variant 1: heat transfer normalized by ideal heat transfer**

According to an embodiment, the heat exchanger effectiveness HXeff is defined as the heat transfer normalized by an ideal maximum heat transfer $Q_{max,ideal}$ estimated and / or determined on the basis of various sensor 6 - 11 data

$$HXeff = Q_{4/5} / Q_{max,ideal} \quad.$$

Theoretically, heat transfer would be equal to the ideal maximum heat transfer if the (counter flow) heat exchanger had an infinitely large heat exchange area. The ideal maximum heat transfer $Q_{max,ideal}$ between conduit 4 and duct 5 depends on the volumetric flow rate of the second fluid (of air) vA through duct 5, on the density of the second fluid (of air) rhoA through duct 5, on the enthalpy EIn of the second fluid (of air) at or near the inlet of duct 5 and on the absolute minimum enthalpy EOutideal of the second fluid (of air) at or near the outlet of duct 5:

$$Q_{max,ideal} = vA \cdot rhoA \cdot (EIn - EOutideal) \quad.$$

The enthalpy of the second fluid such as air as it enters secondary duct 5 is generally a function $f_E$ of inlet temperature Tin, relative humidity HuIn at the inlet of duct 5, and of air pressure:

$$EIn = f_E(TIn, HuIn, pAir) \quad.$$

It is envisaged that function $f_E$ is stored in a memory, preferably in a non-volatile memory, of or associated with controller 12. Function $f_E$ may, for instance, be programmed into the memory, preferably into the non-volatile memory, of or associated with controller 12 by a supplier of thermal heat exchanger 1 during manufacture and / or commissioning. Prior to computing EIn, controller 12 reads $f_E$ from the memory, preferably from the non-volatile memory. Controller 12 then uses $f_E$ and various measured values and computes a value of EIn.

The above calculation of $Q_{max,ideal}$ also depends on absolute minimum enthalpy EOutideal at or near the outlet of duct 5. An estimate of EOutideal can be obtained from the temperature of the first fluid TFl such as water at or near the inlet of duct 4, from absolute humidity of the second fluid (of air) HuAbsIn at the return end of duct 5, and from air pressure pAir:

$$EOutideal = f_F(TFl, HuAbsIn, pAir) \quad.$$

Whenever the inlet temperature of first fluid TFl attains a value below the dew point of the second fluid (of air), HuAbsIn may be set to 100%.

It is envisaged that function $f_F$ is stored in a memory, preferably in a non-volatile memory, of or associated with controller 12. Function $f_F$ may, for instance, be programmed into the memory, preferably into the non-volatile memory, of or associated with controller 12 by a supplier of thermal energy exchanger 1 during manufacture and / or commissioning. Prior to computing EOutideal, controller 12 reads $f_F$ from the memory, preferably from the non-volatile memory. Controller 12 then uses $f_F$ and various measured values and computes a value of EOutideal.

The above computation of $Q_{max,ideal}$ is thus based on, preferably directly based on, values of inlet temperatures obtained from signals from sensors 6 and 9 and also on values of relative or absolute humidity obtained from sensor 9. Second fluid (air) pressure pAir may be derived from signals from sensors 9 and / or 10. Second fluid (air) pressure pAir may as well be estimated from the altitude above sea level of the installation of thermal energy exchanger 1. Second fluid (air) density rhoA may be derived from signals from sensors 9 and / or 10 and / or 11. Second fluid (air) density rhoA may as well be estimated from the altitude above sea level of the installation of thermal energy exchanger 1. It is envisaged that the memory, in particular the non-volatile memory, of or associated with controller 12 provides lookup tables to retrieve values of second fluid (air) pressure pAir as well as of second fluid (air) density rhoA based on altitude and / or geographical location. In addition, a measure of volumetric flowrate vA of a second fluid such as air through secondary duct 5 is required. The measure may be obtained, by non-limiting example, via sensor 11.

**Heat exchanger effectiveness variant 2: heat transfer normalized by maximum heat transfer in case of a cooling coil**

According to another sophisticated embodiment, the heat exchanger effectiveness HXeff is defined as the heat transfer normalized by the maximum estimated heat transfer that theoretically would result in a cooling coil with infinitely high primary side flow

$$\mathrm{HXeff} = \ Q_{4/5}/\ Q_{max,est} \ .$$

The maximum estimated heat transfer $Q_{max,est}$ between conduit 4 and duct 5 depends on the volumetric flow rate of the second fluid (of air) vA through duct 5, on the density of the second fluid (of air) rhoA through duct 5, on the enthalpy EIn of the second fluid (of air) at or near the inlet of duct 5 and on the minimum estimated enthalpy EOutMin of the second fluid (of air) at or near the outlet of duct 5:

$$Q_{max,est} = \ vA \cdot rhoA \ \cdot \ (EIn - EOutMin) \ .$$

The above calculation of $Q_{max,est}$ depends on the minimum estimated enthalpy EOutMin at or near the outlet of duct 5. An estimate of minimum enthalpy EOutMin can be obtained from the minimum estimated temperature TOutMin of the second fluid such as air exiting duct 5, from the minimum estimated absolute humidity HuAbsOutMin of the second fluid (of air) at the return end of duct 5, and from air pressure pAir:

$$EOutMin = \ f_F(TOutMin, HuAbsOutMin, pAir) \ .$$

It is envisaged that function $f_F$ is stored in a memory, preferably in a non-volatile memory, of or associated with controller 12. Function $f_F$ may, for instance, be programmed into the memory, preferably into the non-volatile memory, of or associated with controller 12 by a supplier of thermal energy exchanger 1 during manufacture and / or commissioning. Prior to computing EOutideal, controller 12 reads $f_F$ from the memory, preferably from the non-volatile memory. Controller 12 then uses $f_F$ and various measured values and computes a value of EOutideal.

Calculation of values of estimated absolute humidity HuAbsOutMin and of minimum estimated temperature TOutMin involves a bypass fraction BypF. The bypass fraction BypF is a ratio between a flow of a second fluid (of air) considered unaffected by thermal energy exchanger 1 and a total flow of a second fluid through secondary duct 5. The second fluid at the exit of secondary duct 5 is thus dealt with as a mixture of a portion of the second fluid that takes on the temperature on the surface of the coil and of a portion of the second fluid unaffected by the coil. The dependence of the bypass fraction BypF on the temperatures TIn of second fluid at or near the inlet of duct 5 and TOut of second fluid at or near the outlet of duct 5 reads:

$$BypF = (TOut - TSurfAvg)/(TIn - TSurfAvg).$$

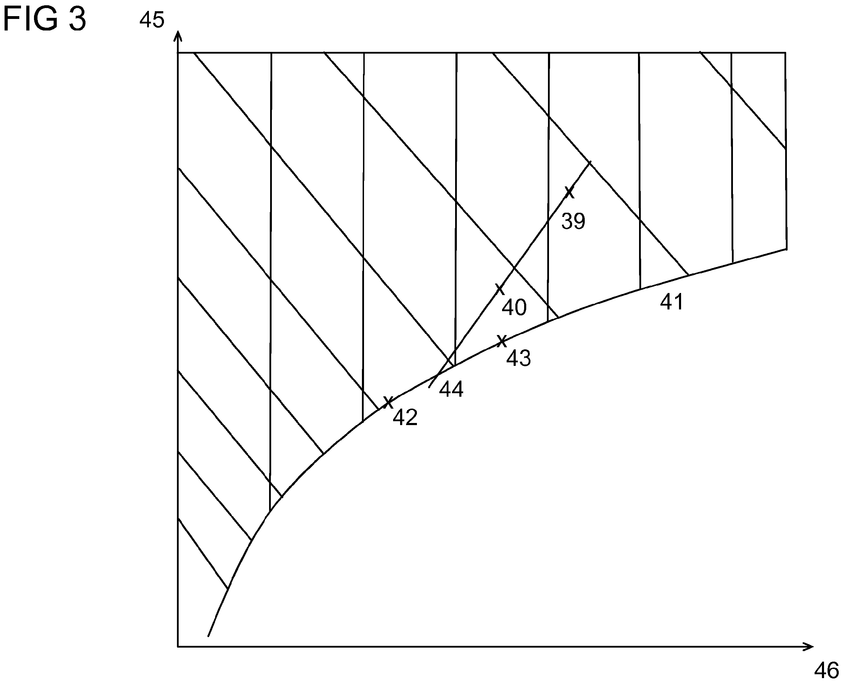

TSurfAvg denotes an estimated or measured average temperature on the coil surface on the secondary side. TSurfAvg may on the one hand be derived from a signal obtained from a sensor 6 - 8. TSurfAvg may on the other hand be estimated from a psychrometric chart such as the chart shown on FIG 3. On the psychrometric chart, a line is drawn connecting second fluid (air) state points of second fluid entering 39 and leaving 40 secondary duct 5. The average coil surface air state then corresponds to the intersection point 44 between the first line and the saturation curve 41.

It is envisaged that a psychrometric chart of dry bulb temperature 45 vs humidity ratio 46 is stored in a memory, preferably in a non-volatile memory, of or associated with controller 12. It is also envisaged that a plurality of psychrometric charts for various atmospheric pressures is stored. A psychrometric chart may, for instance, be programmed into the memory, preferably into the non-volatile memory, of or associated with controller 12 by a supplier of thermal energy exchanger 1 during manufacture and / or commissioning. Prior to computing TSurfAvg, controller 12 reads the psychrometric chart from the memory, preferably from the non-volatile memory. Controller 12 then uses the psychrometric chart and various measured values and computes a value of TSurfAvg.

With this value of TSurfAvg, minimum estimated temperature TOutMin is readily determined as

$$TOutMin = TFl + BypF (TIn - TFl).$$

Likewise, a relationship between minimum estimated absolute humidity HuAbsOutMin, bypass faction BypF and relative humidity HuOut of second fluid (air) exiting and / or leaving (at or near the outlet of) secondary duct 5 reads:

$$HuAbsOutMin=(1 - BypF) \cdot f_{HuAbs}(TFl,100\%,pAir) - BypF \cdot f_{HuAbs}(TOut,HuOut,pAir).$$

It is envisaged that function $f_{HuAbs}$ is stored in a memory, preferably in a non-volatile memory, of or associated with controller 12. Function $f_{HuAbs}$ may, for instance, be programmed into the memory, preferably into the non-volatile memory, of or associated with controller 12 by a supplier of thermal energy exchanger 1 during manufacture and / or commissioning. Prior to computing HuAbsOutMin, controller 12 reads $f_{HuAbs}$ from the memory, preferably from the non-volatile memory. Controller 12 then uses $f_{HuAbs}$ and various measured values and computes a value of HuAbsOutMin.

The above computation of $Q_{max,est}$ is thus based on, preferably directly based on, measures of temperature obtained from signals from sensors 6, 9 and 10 and also on values of relative or absolute humidity obtained from sensor 10. Second fluid (air) pressure pAir may be derived from signals from sensors 9 and / or 10. Second fluid (air) pressure pAir may as well be estimated from the altitude above sea level of the installation of thermal energy exchanger 1. Second fluid (air) density rhoA may be derived from signals from sensors 9 and / or 10 and / or 11. Second fluid (air) density rhoA may as well be estimated from the altitude above sea level of the installation of thermal energy exchanger 1. It is envisaged that the memory, in particular the non-volatile memory, of or associated with controller 12 provides lookup tables to retrieve values of second fluid (air) pressure pAir as well as of second fluid (air) density rhoA based on altitude and / or geographical location. In addition, a measure of volumetric flowrate vA of a second fluid such as air through secondary duct 5 is required. The measure may be obtained, by non-limiting example, via sensor 11.

**Heat exchanger effectiveness variant 3: dehumidification rate normalized by ideal maximum dehumidification rate**

According to yet another sophisticated embodiment, the heat exchanger effectiveness HXeff is defined as the dehumidification rate normalized by the ideal maximum dehumidification rate

$$HXeff = DHu/ DHu_{max,ideal} .$$

The ideal maximum dehumidification rate $DHu_{max,ideal}$ depends on the volumetric flow rate of the second fluid (of air) vA through duct 5, on the density of the second fluid (of air) rhoA through duct 5, on the absolute humidity HuAbsIn of second fluid (or air) at or near the inlet of duct 5, and on an ideal value of absolute humidity HuAbsOutideal of second fluid (of air) at or near the outlet of duct 5:

$$DHu_{max,ideal} = vA \cdot rhoA \cdot (HuAbsIn - HuAbsOutideal) .$$

The above calculation of $DHu_{max,ideal}$ also depends on an ideal value of absolute humidity HuAbsOutideal at or near the outlet of duct 5. An estimate of HuAbsOutideal can be obtained from the temperature of the first fluid TFl such as water at or near the inlet of duct 4, from absolute humidity of the second fluid (of air) HuAbsIn at the return end of duct 5, and from air pressure pAir. Whenever the inlet temperature of first fluid TFl attains a value below the dew point of the second fluid (of air), HuAbsOutideal is determined as follows:

$$HuAbsOutideal = f_{HuAbs}(TFl, 100\%, pAir) .$$

It is envisaged that function $f_{HuAbs}$ is stored in a memory, preferably in a non-volatile memory, of or associated with controller 12. Function $f_{HuAbs}$ may, for instance, be programmed into the memory, preferably into the non-volatile memory, of or associated with controller 12 by a supplier of thermal energy exchanger 1 during manufacture and / or commissioning. Prior to computing HuAbsOutideal, controller 12 reads $f_{HuAbs}$ from the memory, preferably from the non-volatile memory. Controller 12 then uses $f_{HuAbs}$ and various measured values and computes a value of HuAbsOutideal.

**Measurements and (psychrometric) calculations involved in heat exchanger effectiveness determination**

The above computation of $Q_{max,ideal}$, $Q_{max,est}$ and $DHu_{max,ideal}$ is thus based on, preferably directly based on, a measure of temperature obtained from a signal from sensor 6 and also on a value of absolute humidity obtained via sensor 9. Second fluid (air) pressure pAir may be derived from signals from sensors 9 and / or 10. Second fluid (air) pressure pAir may as well be estimated from the altitude above sea level of the installation of thermal energy exchanger 1. Second fluid (air) density rhoA may be derived from signals from sensors 9 and / or 10 and / or 11. Second fluid (air) density rhoA may as well be estimated from the altitude above sea level of the installation of thermal energy exchanger 1. It is envisaged that the memory, in particular the non-volatile memory, of or associated with controller 12 provides lookup tables to retrieve values of second fluid (air) pressure pAir as well as of second fluid (air) density rhoA based on altitude and / or geographical location. In addition, a measure of volumetric flowrate vA of a second fluid such as air through secondary duct 5 is required. The measure may be obtained, by non-limiting example, via sensor 11.

**Preprocessing and cleaning of measured data**

For practical purposes, signals or values of flow $\varphi_{4/5}$ that indicate zero flow or negligible flow or flow below a predetermined threshold may be ignored. For volume flow sensors 8, 11, flow values may be disregarded and / or abandoned, if, by way of non-limiting examples, these values indicate 0.000 m$^3$/second of volume flow or less than 0.001 m$^3$/second of volume flow or less than 0.01 m$^3$/second of volume flow. For mass flow sensors 8, 11, flow values may be disregarded and / or abandoned, if, by way of non-limiting examples, these values indicate 0.000 kg/second of mass flow or less than 0.001 kg/second of mass flow or less than 0.01 kg/second of mass flow.

Flow signals may be abandoned or disregarded on the sensor level. In a practical embodiment, a sensor signal will be suppressed, if its amplitude or peak value roughly corresponds to the level of noise inherent to the sensor and / or to the circuit. That is, if any of the flow sensors 8, 11 produces a signal that is below a predetermined threshold, that signal will be disregarded. A sensor signal may, by way of non-limiting example, be disregarded or suppressed if its amplitude or peak value does not exceed 2 millivolts or 5 millivolts or 10 millivolts. To that end, sensors 8, 11 may provide suitable (analog or digital) filter circuits to suppress low amplitude signals.

Flow signals may as well be abandoned or disregarded on the controller level. Controller 12 may, by way of another non-limiting example, achieve suppression of a signal by comparing its amplitude and / or its peak value to a threshold value 34. Suppression of a signal may, for instance, be achieved via a threshold 34, preferably via an adjustable threshold 34, of an input channel of analog-to-digital converter 19. In an alternate embodiment, controller 12 suppresses values of flow $\varphi_{4/5}$ by comparing such values to a predetermined threshold 34. Controller 12 ideally stores a plurality of threshold values in its non-volatile memory and / or can be configured to vary threshold levels. According to an aspect, a supplier of the thermal energy exchanger provides a controller 12 with a memory and with threshold levels programmed into the memory of the controller 12. It is envisaged that threshold levels are programmed into the memory of controller 12 by a supplier of the thermal energy exchanger 1 in the course of manufacture or commissioning.

For practical purposes, signals or values of heat transfer $Q_{4/5}$ that indicate zero heat transfer or negligible heat transfer or heat transfer below a predetermined threshold may be ignored. Values of heat transfer may be disregarded and / or abandoned, if, by way of non-limiting examples, these values indicate 0.000 Joules/second of transferred energy or less than 10 Joules/second of transferred energy or less than 100 Joules/second of transferred energy.

Signals related to heat transfer may be abandoned or disregarded on the sensor level. In a practical embodiment, a sensor signal will be suppressed, if its amplitude or peak value roughly corresponds to the level of noise inherent to the sensor and / or to the circuit. That is, if any of the temperature sensors 6, 7, 9, 10 produces a signal that is below a predetermined threshold, that signal will be disregarded. A sensor signal may, by way of non-limiting example, be disregarded or suppressed if its amplitude or peak value does not exceed 2 milliVolts or 5 milliVolts or 10 milliVolts. To that end, sensors 6, 7, 9, 10 may provide suitable filter circuits to suppress low amplitude signals.

In a sophisticated embodiment, signals from supply sensors 6, 9 are compared to signals from return sensors 7, 10. The sensor signals may, by way of non-limiting example, be disregarded or suppressed if their amplitudes or peak values do not exceed 2 millivolts or 5 millivolts or 10 milliVolts. To that end, suitable (analog or digital) filter circuits are provided that enable pairwise comparison and suppression of sensor signals.

Signals related to heat transfer may as well be abandoned or disregarded on the controller level. Controller 12 may, by way of another non-limiting example, achieve suppression of a signal by comparing its amplitude and / or its peak value to a threshold value 35. Suppression of a signal may, for instance, be achieved via a threshold 35, preferably via an adjustable threshold 35, of an input channel of analog-to-digital converter 19. In an alternate embodiment, controller 12 suppresses values of heat transfer $Q_{4/5}$ by comparing such values to a predetermined threshold 35. Controller 12 ideally stores a plurality of threshold values in its non-volatile memory and / or can be configured to vary threshold levels. According to an aspect, a supplier of the thermal energy exchanger provides a controller 12 with a memory and with threshold levels programmed into the memory of the controller 12. It is envisaged that threshold levels are programmed into the memory of controller 12 by a supplier of the thermal energy exchanger 1 in the course of manufacture or commissioning.

**Methods to calculate / fit characteristic transfer function**

Upon recording and suppressing these signals, controller 12 forms sets of values. Each set of values comprises values of normalized flow $\varphi_{norm,4/5}$. Each set of values also comprises a value of heat transfer effectiveness HXeff associated with the values of normalized flow $\varphi_{norm,4/5}$. Since values of heat transfer effectiveness HXeff are determined as a function of normalized flows $\varphi_{norm,4/5}$, such sets of values ($\varphi_{norm,4/5}$, HXeff) can be generated. FIG 2 indicates several such sets 27 - 33. Controller 12 ideally writes sets of values ($\varphi_{norm,4/5}$, HXeff) to its memory, preferably to its non-volatile memory.

In an embodiment, the plurality of sets of values ($\varphi_{norm,4/5}$, HXeff) defines an empirically determined characteristic transfer function. It is envisaged that at least five sets of values ($\varphi_{norm,4/5}$, HXeff), at least ten sets of values ($\varphi_{norm,4/5}$, HXeff), or at least twenty sets of values ($\varphi_{norm,4/5}$, HXeff) define an empirically determined characteristic transfer function.

In a practical embodiment, controller 12 functions to interpolate between adjacent sets of values ($\varphi_{norm,4/5}$, HXeff). Interpolation yields an empirically determined characteristic transfer function also at normalized flow values ($\varphi_{norm,4/5}$ and / or at values of heat transfer effectiveness HXeff where no measurement was conducted. Controller 12 advantageously interpolates between sets of values ($\varphi_{norm,4/5}$, HXeff) that correspond to adjacent values of normalized flow $\varphi_{norm,4/5}$ along the normalized flow axis 23. That is, values of heat transfer HXeff are determined by interpolation for any given normalized flow value $\varphi_{norm,4/5}$ in between two measured normalized flow values. In the alternative, controller 12 interpolates between sets of values ($\varphi_{norm,4/5}$, HXeff) that correspond to adjacent values of heat transfer effectiveness HXeff along axis 24. That is, values of normalized flow $\varphi_{norm,4/5}$ are determined by interpolation for any given value of heat transfer effectiveness HXeff in between two measured values of heat transfer effectiveness.

It is envisaged that controller 12 interpolates using linear or quadratic interpolation. It is also envisaged that controller 12 interpolates using polynomial or rational function interpolation. It is also envisaged that controller 12 interpolates using splines, in particular cubic splines and / or Hermite splines. It is still further envisaged that controller 12 interpolates via a (digitally encoded) low-pass filter.

Controller 12 may also empirically determine a characteristic transfer function 37 via a fitting algorithm. The fitting algorithm yields an empirically determined characteristic transfer function also at normalized flow values $\varphi_{norm,4/5}$ and / or at values of heat transfer effectiveness HXeff where no measurement was conducted. Use of a fitting algorithm requires a sufficiently differentiable analytical map $f_{a,b,c}$ in the form

$$\varphi_{norm,4/5} \rightarrow HXeff: HXeff = f_{a,b,c...}\left(\varphi_{norm,4/5}\right),$$

or in the multi-dimensional form

$$\left(\varphi_{norm,4}, \varphi_{norm,5}\right) \rightarrow HXeff: HXeff = f_{a,b,c...}\left(\varphi_{norm,4}, \varphi_{norm,5}\right),$$

wherein a, b, c etc. are parameters to be determined (computed) by the fitting algorithm. Should heat transfer effectiveness HXeff depend on the two flow values $\varphi_{norm,4}$ through duct 4 and $\varphi_{norm,5}$ through duct 5, a surface fitting algorithm is employed. The practical effect of these parameters a, b, c etc. on the characteristic transfer function can, by way of non-limiting example, be a shift or a scale factor 36, 38.

It is envisaged that characteristic transfer function $f_{a,b,c}$ is stored in a memory, preferably in a non-volatile memory, of or associated with controller 12. A characteristic transfer function $f_{a,b,c}$ may, for instance, be programmed into the memory, preferably into the non-volatile memory, of or associated with controller 12 by a supplier of thermal energy exchanger 1 during manufacture and / or commissioning. Prior to computing $Q_{4/5}$, controller 12 reads $f_{a,b,c}$ from the memory, preferably from the non-volatile memory. Controller 12 then uses $f_{a,b,c}$ and various measured values and computes a value of $E_{4/5}$.

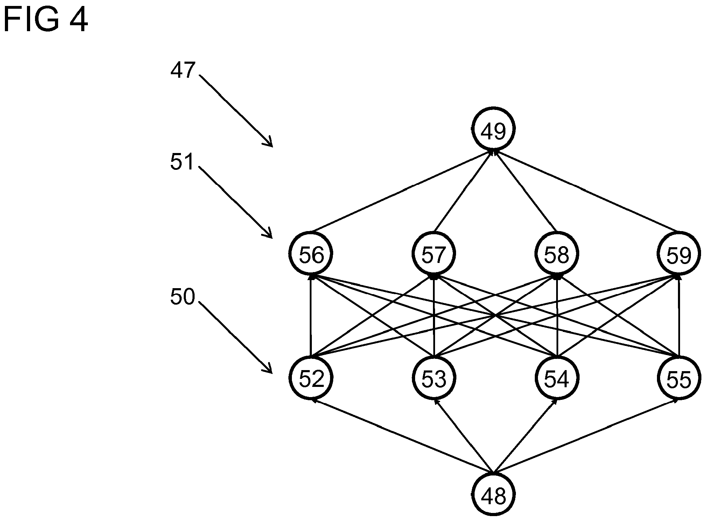

In an embodiment, controller 12 implements a neural network such as the network 47 shown on FIG 4. The neural network 47 comprises at least an input neuron 48 that corresponds to (is associated with) a value of normalized flow $\varphi_{norm,4/5}$. Any input to the neural network is ideally normalized. The neural network also comprises an output neuron 49 indicative of heat transfer effectiveness HXeff. According to an aspect, a value produced by output neuron of 0 indicates no heat transfer whereas an output value of 1 indicates maximum and / or full heat transfer. The neural network also comprises a number of hidden layers 50, 51, each layer 50, 51 with a number of hidden neurons 52 - 55, 56 - 59. In an embodiment, the neural network comprises a single layer of hidden neurons. In another embodiment, the neural network comprises two layers of hidden neurons. The neurons may, by way of non-limiting example, have sigmoid and / or hyperbolic tangent and / or step-wise activation functions. The neurons are advantageously biased.

The neural network 47 is ideally trained under test conditions. A series of measurements obtained under various flow conditions is employed to train network 47. Neural network 47 may, by way of example, be trained by a supervised training algorithm such as backpropagation. It is also envisaged that neural network 47 is trained using an evolutionary algorithm such as a genetic algorithm. The skilled artisan may actually combine training algorithms. A genetic algorithm may, by way of example, be employed to find a coarse estimate of the weights of the connections of neural network 47. A backpropagation algorithm is then employed to further improve on the performance of the network 47.

After training the configuration of neural network 47 and / or the weights of the connections of neural network 47 are saved in a memory of or associated with controller 12. The configuration of the neural network 47 and / or the weights of the connections of the neural network 47 as a whole then define a characteristic transfer function 37 of thermal energy exchanger 1.

**Determine characteristic transfer function in operation**

In operation, controller 12 collects measurements of flow $\varphi_{4/5}$, calculates the normalized flow $\varphi_{norm,4/5}$ and feeds them into the characteristic transfer function. The characteristic transfer function then produces an output signal indicative of heat transfer effectiveness HXeff.

In other words, the instant disclosure teaches a method of operating a thermal energy exchanger (1) for exchanging thermal energy between a first fluid flowing through the thermal energy exchanger (1) in a first duct (4) and a second fluid flowing through the thermal energy exchanger (1) in a second duct (5), the method comprising the steps of:

recording in a control system (12, 19, 22) a plurality of measurement data sets, each of the measurement data sets including for a different point in time values of flow ($\varphi_{4/5}$) of the first and second fluids and a value of a dehumidification rate (DHu) of the second fluid;

the control system (12, 19, 22) computing for each of the measurement data sets normalized values of flow ($\varphi_{norm,4/5}$) as functions of the values of flow ($\varphi_{4/5}$) of the measurement data set and associating the normalized values of flow with the measurement data set;

the control system (12, 19, 22) computing for each of the measurement data sets at least one normalization variable ($DHu_{max,ideal}$) as a function of the dehumidification rate (DHu) of the measurement data set and associating the at least one normalization variable ($Q_{max,ideal}$, $Q_{max,est}$, $DHu_{max,ideal}$) with the measurement data set;

the control system (12, 19, 22) computing for each of the measurement data sets a value of heat exchanger effectiveness (HXeff) by relating the value of the dehumidification rate (DHu) of the measurement data set to the at least one normalization variable ($Q_{max,ideal}$, $Q_{max,est}$, $DHu_{max,ideal}$) associated with the measurement data set and associating the heat exchanger effectiveness (HXeff) with the measurement data set;

the control system (12, 19, 22) computing for each of the measurement data sets normalized data points ($\varphi_{norm,4/5}$, HXeff) defined by the values of normalized flow ($\varphi_{norm,4/5}$) associated with the measurement data set and by the value of heat exchanger effectiveness (HXeff) associated with the measurement data set; and

the control system (12, 19, 22) determining for the thermal energy exchanger (1) a characteristic transfer function (37) which fits the normalized data points ($\varphi_{norm,4/5}$, HXeff).

In an embodiment, the control system (12, 19, 22) employs a neural network and / or least square fitting and / or least square surface fitting and / or a Marquardt-Levenberg gradient descent algorithm and / or a multi-dimensional Marquardt-Levenberg gradient descent algorithm to determine for the thermal energy exchanger (1) a characteristic transfer function (37) which fits the normalized data points ($\varphi_{norm,4/5}$, HXeff).

**Content of measurement data sets**

According to an aspect, second duct (5) comprises an inlet and an outlet. Second fluid flows in the second duct (5) from the inlet of the second duct (5) to the outlet of the second duct (5). Each of the measurement data sets includes, preferably for a different point in time, a value (indicative) of humidity of the second fluid in the second duct (5), wherein the value (indicative) of humidity indicates absolute humidity (at or near the inlet of the second duct (5)).

According to another aspect, second duct (5) comprises an inlet and an outlet. Second fluid flows in the second duct (5) from the inlet of the second duct (5) to the outlet of the second duct (5). Each of the measurement data sets includes, preferably for a different point in time, a value (indicative) of humidity of the second fluid in the second duct (5), wherein the value (indicative) of humidity indicates relative humidity (at or near the outlet of the second duct (5)).

**Calculation of maximum primary flow using characteristic transfer function**

The instant disclosure further teaches one of the aforementioned methods, the method additionally comprising the steps of:

> the control system (12, 19, 22) employing the characteristic transfer function (37) to compute a maximum flow rate (25); and
> the control system (12, 19, 22) operating the thermal energy exchanger (1) at flow rates ($\varphi_4$) of the first fluid flowing through the thermal energy exchanger (1) in the first duct (4) below the maximum flow rate (25).

**Limiting primary flow to maximum flow by pump**

According to an aspect, the thermal energy exchanger (1) comprises a first fluid conveyor such as a (variable speed) pump arranged in the first duct (4). The first fluid conveyor is communicatively coupled to the control system (12, 19, 22). The control system (12, 19, 22) operates the thermal energy exchanger (1) at values of flow ($\varphi_4$) of the first fluid flowing through the thermal energy exchanger (1) in the first duct (4) below the maximum flow rate (25) by sending first signals to the first fluid conveyor;
wherein the first signals indicate values of flow of the first fluid below the maximum flow rate (25).

**Limiting primary flow to maximum flow by valve**

According to another aspect, the thermal energy exchanger (1) comprises a first controlled valve arranged in the first duct (4). The first controlled valve is communicatively coupled to the control system (12, 19, 22). The control system (12, 19, 22) operates the thermal energy exchanger (1) at values of flow ($\varphi_4$) of the first fluid flowing through the thermal energy exchanger (1) in the first duct (4) below the maximum flow rate (25) by sending first signals to the first controlled valve;
wherein the first signals indicate values of flow of the first fluid below the maximum flow rate (25).

**Calculation of maximum secondary flow using characteristic transfer function**

The instant disclosure further teaches one of the aforementioned methods, the method additionally comprising the steps of:

> the control system (12, 19, 22) employing the characteristic transfer function (37) to compute a maximum flow rate (25); and
> the control system (12, 19, 22) operating the thermal energy exchanger (1) at flow rates ($\varphi_5$) of the second fluid flowing through the thermal energy exchanger (1) in the second duct (5) below the maximum flow rate (25).

**Limiting secondary flow to maximum flow by fan**

According to an aspect, the thermal energy exchanger (1) comprises a second fluid conveyor such as a (variable speed) fan arranged in the second duct (5). The second fluid conveyor is communicatively coupled to the control system (12, 19, 22). The control system (12, 19, 22) operates the thermal energy exchanger (1) at values of flow ($\varphi_5$) of the second fluid flowing through the thermal energy exchanger (1) in the second duct (5) below the maximum flow rate (25) by sending second signals to the second fluid conveyor;
wherein the second signals indicate values of flow of the second fluid below the maximum flow rate (25).

**Limiting secondary flow to maximum flow by damper**

According to another aspect, the thermal energy exchanger (1) comprises a controlled damper arranged in the second duct (5). The controlled damper is communicatively coupled to the control system (12, 19, 22). The control system (12, 19, 22) operates the thermal energy exchanger (1) at values of flow ($\varphi_5$) of the second fluid flowing through the thermal energy exchanger (1) in the second duct (5) below the maximum flow rate (25) by sending second signals to the controlled damper;
wherein the second signals indicate values flow of the second fluid below the maximum flow rate (25).

**Method to calculate maximum flow**

In an embodiment, the control system (12, 19, 22) searches for and / or determines a peak value (26) of the characteristic transfer function (37) along the axis indicating heat transfer effectiveness (24). The control system (12, 19, 22) employs the characteristic transfer function (37) to determine from the peak value (26) a maximum normalized flow value (25). The maximum flow rate preferably is at most 95% of the flow value (25) that corresponds to the peak value (26), more preferably at most 90% of the flow value (25) that corresponds to the peak value (26), yet more preferably at most 80% of the flow value (25) that corresponds to the peak value (26).

**Processing of measurements**

The instant disclosure further teaches one of the aforementioned methods, wherein the thermal energy exchanger (1) comprises a first flow sensor (8) secured relative to the first duct (4) and configured to produce first flow signals indicative of flow of the first fluid in the first duct (4) and a second flow sensor (11) secured relative to the second duct (5) and configured to produce second flow signals indicative of flow of the second fluid in the second duct (5), wherein the first flow sensor (8) and the second flow sensor (11) are communicatively coupled to the control system (12, 19, 22), the method additionally comprising the steps of:

the control system (12, 19, 22) reading first flow signals from the first flow sensor (8);
the control system (12, 19, 22) reading second flow signals from the second flow sensor (11);
the control system (12, 19, 22) producing values of flow ($\varphi_{4/5}$) of the first and second fluids from the first flow signals and from the second flow signals; and
recording in the control system (12, 19, 22) a plurality of measurement data sets, each of the measurement data sets including for a different point in time values of flow ($\varphi_{4/5}$) produced by the control system (12, 19, 22) and a value of a dehumidification rate (DHu) of the second fluid.

It is envisaged that the second flow sensor (11) is affixed to and / or mounted to and / or secured relative to the second duct (5).
The instant disclosure further teaches one of the aforementioned methods, wherein a connection with a noise cancellation filter communicatively couples the second flow sensor (11) to the control system (12, 19, 22), the method additionally comprising the steps of:

the noise cancellation filter reading second flow signals from the second flow sensor (11) and cancelling second flow signals indicative of zero flow or of flow below a predetermined threshold for flow;
the control system (12, 19, 22) reading second flow signals passing the noise cancellation filter.

In an embodiment, the thermal energy exchanger (1) comprises the noise cancellation filter and preferably also the connection. The noise cancellation filter may be an analog or a digital filter. The noise cancellation filter may, in a particular embodiment, be part of the analog-to-digital converter (19) of the control system (12, 19, 22).
The instant disclosure still further teaches one of the aforementioned methods, wherein the second duct (5) comprises an inlet and an outlet and wherein the second fluid flows in the second duct (5) from the inlet to the outlet, wherein the thermal energy exchanger (1) comprises a second flow sensor (11) secured relative to the second duct (5) and configured to produce second flow signals indicative of flow of the second fluid in the second duct (5), and a second inlet sensor (9) secured relative to the inlet of the second duct (5) and configured to produce second inlet temperature signals indicative of temperature of the second fluid, and a second outlet sensor (10) secured relative to the outlet of the second duct (5) and configured to produce second outlet temperature signals indicative of temperature of the second fluid, wherein the second flow sensor (11), the second inlet sensor (9), and the second outlet sensor (10) are communicatively coupled to the control system (12, 19, 22),
the method additionally comprising the steps of:

the control system (12, 19, 22) reading second flow signals from the second flow sensor (11) and second inlet temperature signals from the second inlet sensor (9) and second outlet temperature signals from the second outlet sensor (10);
the control system (12, 19, 22) producing values of thermal energy exchanged ($Q_{4/5}$) in the thermal energy exchanger (1) between the first fluid and the second fluid from the second flow signals and from the second inlet temperature signals and from the second outlet temperature signals;
recording in the control system (12, 19, 22) a plurality of measurement data sets, each of the measurement data sets including for a different point in time values of flow ($\varphi_{4/5}$) of the first and second fluids and a value of the heat exchanged ($Q_{4/5}$) produced by the control system (12, 19, 22) and a value of a dehumidification rate (DHu) of the second fluid.

It is envisaged that the second inlet sensor (9) is affixed to and / or mounted to and / or secured relative to the second duct (5). The second inlet sensor (9) is preferably arranged at or near the inlet of second duct (5). It is envisaged that the second outlet sensor (10) is affixed to and / or mounted to and / or secured relative to the second duct (5). The second outlet sensor (10) is preferably arranged at or near the outlet of second duct (5).

The instant disclosure still further teaches one of the aforementioned methods, wherein a three-way connection with a three-way filter communicatively couples the second inlet sensor (9) and the second outlet sensor (10) to the control system (12, 19, 22), the method additionally comprising the steps of:

the three-way filter reading second inlet temperature signals from the second inlet sensor (9) and second outlet temperature signals from the second outlet sensor (10) and forming sets of signals, each set comprising a read second inlet temperature signal and a read second outlet temperature signal, and cancelling sets of signals wherein the read first inlet temperature signal and the read second inlet temperature signal differ by less than a predetermined threshold for differential temperature;
the control system (12, 19, 22) reading second inlet signals and second outlet signals passing the three-way filter.

In an embodiment, the aforementioned filters serially read signals from sensors. In an alternate embodiment, the aforementioned filters read signals from sensors in parallel.

In an embodiment, the thermal energy exchanger (1) comprises the three-way filter and preferably also the three-way connection. The three-way filter may be an analog or a digital filter. The three-way filter may, in a particular embodiment, be part of the analog-to-digital converter (19) of the control system (12, 19, 22). The three-way filter may also be a noise cancellation filter. The three-way filter advantageously comprises a first input channel communicatively coupled to the first inlet sensor (9) and a second input channel communicatively coupled to the second inlet sensor (10). The three-way filter also comprises an output channel communicatively coupled to the control system (12, 19, 22).

**Additional measurements used in the method**

The instant disclosure yet further teaches one of the aforementioned methods, wherein the first duct (4) comprises an inlet and an outlet and wherein the first fluid flows in the first duct (4) from the inlet to the outlet, the method additionally comprising the steps of:

recording in a control system (12, 19, 22) a plurality of measurement data sets, each of the measurement data sets including for a different point in time values of flow ($\varphi_{4/5}$) of the first and second fluids and a value of inlet temperature (TFI) of the first fluid and a value of a dehumidification rate (DHu) of the second fluid;
the control system (12, 19, 22) computing for each of the measurement data sets at least one normalization variable ($DHu_{max,ideal}$) as a function of the values of flow ($\varphi_{4/5}$) of the measurement data set and as a function of the value of inlet temperature (TFI) of the measurement data set and associating the at least one normalization variable ($DHu_{max,ideal}$) with the measurement data set.

The instant disclosure yet further teaches one of the aforementioned methods, the method additionally comprising the steps of:

recording in a control system (12, 19, 22) a plurality of measurement data sets, each of the measurement data sets including for a different point in time values of flow ($\varphi_{4/5}$) of the first and second fluids and a value of pressure (pAir) of the second fluid and a value of a dehumidification rate (DHu) of the second fluid;
the control system (12, 19, 22) computing for each of the measurement data sets at least one normalization variable ($DHu_{max,ideal}$) as a function of the values of flow ($\varphi_{4/5}$) of the measurement data set and as a function of the value of pressure (pAir) of the measurement data set and associating the at least one normalization variable ($DHu_{max,ideal}$) with the measurement data set.

It is envisaged that the first inlet sensor (6) is affixed to and / or mounted to and / or secured relative to the first duct (4). The first inlet sensor (6) is preferably arranged at or near the inlet of first duct (4).

The instant disclosure yet further teaches one of the aforementioned methods, wherein the second duct (5) comprises an inlet and an outlet and wherein the second fluid flows in the second duct (5) from the inlet to the outlet, wherein the thermal energy exchanger (1) comprises a first flow sensor (8) secured relative to the first duct (4) and configured to produce first flow signals indicative of flow of the first fluid in the first duct (4) and a second flow sensor (11) secured relative to the second duct (5) and configured to produce second flow signals indicative of flow of the second fluid in the second duct (5), and a second inlet sensor (9) secured relative to the inlet of the second duct (5) and configured to produce second inlet temperature signals indicative of temperature of the second, and a second outlet sensor (10) secured relative to the outlet of the second duct (5) and configured to produce second outlet temperature signals indicative of temperature of the second fluid, and a second humidity sensor (9; 10) secured relative to the second duct (5) and configured to produce second humidity signals indicative of humidity of the second fluid in the second duct (5), wherein the second flow sensor (11), the second inlet sensor (9), the second outlet sensor (10), and the second humidity sensor are communicatively coupled to the control system (12, 19, 22),
the method additionally comprising the steps of:

the control system (12, 19, 22) reading first flow signals from the first flow sensor (8) and reading second flow signals from the second flow sensor (11) and second inlet temperature signals from the second inlet sensor (9) and second outlet temperature signals from the second outlet sensor (10) and second humidity signals from the second humidity sensor (6);

the control system (12, 19, 22) producing values of flow ($\varphi_{4/5}$) of the first and second fluids from the first flow signals and from the second flow signals and producing values of thermal energy exchanged ($Q_{4/5}$) in the thermal energy exchanger (1) between the first fluid and the second fluid from the second flow signals and from the second inlet temperature signals and from the second outlet temperature signals and producing values indicative of a dehumidification rate (DHu) from the second humidity signals;

recording in the control system (12, 19, 22) a plurality of measurement data sets, each of the measurement data sets including for a different point in time values of flow ($\varphi_{4/5}$) produced by the control system (12, 19, 22) and a value of the heat exchanged ($Q_{4/5}$) produced by the control system (12, 19, 22) and a value of a dehumidification rate (DHu) produced by the control system (12, 19, 22).

## Measurement devices and setup

It is envisaged that the second humidity sensor (9; 10) is affixed to and / or mounted to and / or secured relative to the second duct (5). The second humidity sensor (9) is in an embodiment arranged at or near the inlet of second duct (5). The second humidity sensor (10) is in another embodiment arranged at or near the outlet of second duct (5). The second humidity sensor (9) and the second inlet temperature sensor (9) are, according to an aspect, identical sensors. That is, a single sensor (9) delivers signals indicative of humidity and also signals indicative of temperature. In the alternative, the second humidity sensor and the second inlet temperature sensor are separate sensors. The second humidity sensor (10) and the second outlet temperature sensor (10) are, according to an aspect, identical sensors. That is, a single sensor (10) delivers signals indicative of humidity and also signals indicative of temperature. In the alternative, the second humidity sensor and the second outlet temperature sensor are separate sensors.

## Computer program product to calculate characteristic transfer function

The instant disclosure also teaches a computer program product comprising a non-transient computer-readable medium having stored thereon computer program code configured to control a processor of a control system (12, 19, 22) for operating a thermal energy exchanger (1) for exchanging thermal energy between a first fluid flowing through the thermal energy exchanger (1) in a first duct (4) and a second fluid flowing through the thermal energy exchanger (1) in a second duct (5), the processor performs the following steps:

recording in a control system (12, 19, 22) a plurality of measurement data sets, each of the measurement data sets including for a different point in time values of flow ($\varphi_{4/5}$) of the first and second fluids and a value of a dehumidification rate (DHu) of the second fluid;
the control system (12, 19, 22) computing for each of the measurement data sets normalized values of flow ($\varphi_{norm,4/5}$) as functions of the values of flow ($\varphi_{4/5}$) of the measurement data set and associating the normalized values of flow with the measurement data set;
the control system (12, 19, 22) computing for each of the measurement data sets at least one normalization variable ($DHu_{max,ideal}$) as a function of the dehumidification rate (DHu) of the measurement data set and associating the at least one normalization variable ($DHu_{max,ideal}$) with the measurement data set;
the control system (12, 19, 22) computing for each of the measurement data sets a value of heat exchanger effectiveness (HXeff) by relating the value of the dehumidification rate (DHu) of the measurement data set to the at least one normalization variable ($DHu_{max,ideal}$) associated with the measurement data set and associating the heat exchanger effectiveness (HXeff) with the measurement data set;
the control system (12, 19, 22) computing for each of the measurement data sets normalized data points ($\varphi_{norm,4/5}$,

HXeff) defined by the values of normalized flow ($\varphi_{norm,4/5}$) associated with the measurement data set and by the value of heat exchanger effectiveness (HXeff) associated with the measurement data set; and

the control system (12, 19, 22) determining for the thermal energy exchanger (1) a characteristic transfer function (37) which fits the normalized data points ($\varphi_{norm,4/5}$, HXeff).

In an embodiment, the (processor of the) control system (12, 19, 22) employs a neural network and / or least square fitting and / or least square surface fitting and / or a Marquardt-Levenberg gradient descent algorithm and / or a multi-dimensional Marquardt-Levenberg gradient descent algorithm to determine for the thermal energy exchanger (1) a characteristic transfer function (37) which fits the normalized data points ($\varphi_{norm,4/5}$, HXeff).

The instant disclosure also teaches one of the aforementioned computer program products, wherein psychrometric data are stored on the non-transient computer-readable medium and wherein the second duct (5) comprises an inlet and an outlet and wherein the second fluid flows in the second duct (5) from the inlet to the outlet, the processor performs the following additional steps:

recording in a control system (12, 19, 22) a plurality of measurement data sets, each of the measurement data sets including for a different point in time values of flow ($\varphi_{4/5}$) of the first and second fluids and a value of the heat exchanged ($Q_{4/5}$) between the first fluid and the second fluid and a value of inlet temperature (Tin) and a value of outlet temperature (TOut) and a value of a dehumidification rate (DHu) of the second fluid;

the control system (12, 19, 22) employing for each of the measurement data sets the psychrometric data (39 - 46) to compute the at least one normalization variable ($Q_{max,ideal}$, $Q_{max,est}$, $DHu_{max,ideal}$) as a function of the values of flow ($\varphi_{4/5}$) of the measurement data set and as a function of the value of inlet temperature (Tin) of the measurement data set and as a function of the value of outlet temperature (TOut) of the measurement data set and associating the at least one normalization variable ($Q_{max,ideal}$, $Q_{max,est}$, $DHu_{max,ideal}$) with the measurement data set.

The psychrometric data (39 - 46) advantageously comprise a psychrometric chart. The psychrometric chart ideally relates dry bulb temperature and enthalpy of the second fluid (of humid air) to humidity ratio of the second fluid (of air). The psychrometric chart may, by way of non-limiting example, be a plot of dry bulb temperature of the second fluid (of air) versus humidity ratio of the second fluid (of air).

It is envisaged that (the processor) of the control system (12, 19, 22) reads the psychrometric data from the non-transient computer-readable medium.

The instant disclosure also teaches one of the aforementioned computer program products, wherein a predefined flow threshold value is stored on the non-transient computer-readable medium, the processor performs the following additional steps:

the control system (12, 19, 22) comparing for each measurement data set each of the values of flow ($\varphi_{4/5}$) to the predefined flow threshold value;

the control system (12, 19, 22) cancelling each measurement data set wherein at least one of the values of flow ($\varphi_{4/5}$) is below the predefined flow threshold value.

According to an aspect, the processor of the control system (12, 19, 22) carries out the steps of the aforementioned methods.

It is envisaged that (the processor) of the control system (12, 19, 22) reads the predefined flow threshold value from the non-transient computer-readable medium.

The instant disclosure still further teaches one of the aforementioned computer program products, wherein a predefined thermal heat transfer threshold value is stored on the non-transient computer-readable medium, the processor performs the following additional steps:

the control system (12, 19, 22) comparing for each measurement data set the value of the heat exchanged ($Q_{4/5}$) to the predefined thermal heat transfer threshold value;

the control system (12, 19, 22) cancelling each measurement data set wherein the value of the heat exchanged ($Q_{4/5}$) is below the predefined thermal heat transfer threshold value.

According to an aspect, cancelling or disregarding or deleting values implies that the values are not employed to determine the characteristic transfer function (37).

Any steps carried out by the computer program products carried out by the control system (12, 19, 22) are advantageously carried out by the processor of the control system (12, 19, 22).

## Measurement locations

It is envisaged that near the inlet of the first duct (4) is at most 0.5 m from the inlet of the first duct (4), preferably at most 0.1 m from the inlet of the first duct (4), still more preferred at most 0.05 m from the inlet of the first duct (4). It is also envisaged that near the outlet of the first duct (4) is at most 0.5 m from the outlet of the first duct (4), preferably at most 0.1 m from the outlet of the first duct (4), still more preferred at most 0.05 m from the outlet of the first duct (4).
It is envisaged that near the inlet of the second duct (5) is at most 0.5 m from the inlet of the second duct (5), preferably at most 0.1 m from the inlet of the second duct (5), still more preferred at most 0.05 m from the inlet of the second duct (5). It is also envisaged that near the outlet of the second duct (5) is at most 0.5 m from the outlet of the second duct (5), preferably at most 0.1 m from the outlet of the second duct (5), still more preferred at most 0.05 m from the outlet of the second duct (5).

## Mass flow or volumetric flow

In an embodiment, the value of flow ($\varphi_5$) is or indicates volumetric flow. In an alternate embodiment, the value of flow ($\varphi_5$) is or indicates mass flow.

## Computing location

In an embodiment, the control system (12, 19, 22) comprises a controller (12) of the thermal energy exchanger (1) and a cloud computing arrangement (22). The cloud computing arrangement (22) is disposed remotely from the thermal energy exchanger (1). A bidirectional communication link functions to connect the control system controller (12) to the cloud computing arrangement (22).
In this disclosure, the phrase at or near an item preferably means less than 15 mm from the respective item, more preferably less than 10 mm from the respective item, still more preferably less than 5 mm from the respective item.
Any steps of a method according to the present disclosure may be embodied in hardware, in a software module executed by a processor, in a cloud computing arrangement, or in a combination thereof. The software may include a firmware, a hardware driver run in the operating system, or an application program. Thus, the disclosure also relates to a computer program product for performing the operations presented herein. If implemented in software, the functions described may be stored as one or more instructions on a computer-readable medium. Some examples of storage media that may be used include random access memory (RAM), read only memory (ROM), flash memory, EPROM memory, EEPROM memory, registers, a hard disk, a removable disk, other optical disks, or any available media that can be accessed by a computer or any other IT equipment and appliance.
It should be understood that the foregoing relates only to certain embodiments of the disclosure and that numerous changes may be made therein without departing from the scope of the disclosure as defined by the following claims. It should also be understood that the disclosure is not restricted to the illustrated embodiments and that various modifications can be made within the scope of the following claims.

Reference numerals

1 thermal energy exchanger
2 primary circuit
3 secondary circuit
4 conduit
4a inlet of conduit 4
4b outlet of conduit 4
5 duct
5a inlet of duct 5
5b outlet of duct 5
6 supply end sensor of primary circuit 2
7 return end sensor of primary circuit 2
8 flow sensor of primary circuit 2
9 supply end sensor of secondary circuit 3
10 return end sensor of secondary circuit 3
11 flow sensor of secondary circuit 3
12 controller

13 - 18 bus connections for sensors 6 - 11

19 analog-to-digital converter

20 enclosure

21 cloud connection

22 cloud server

23 normalized flow

24 heat transfer effectiveness

25 maximum normalized flow (for efficient heat exchanger operation)

26 maximum heat transfer effectiveness (for efficient heat exchanger operation)

27 - 33 sets of recorded values

34 threshold value for normalized flow

35 threshold value for heat transfer effectiveness

36 scale factor

37 characteristic transfer function

38 scale factor

39 point on psychrometric chart corresponding to second fluid at or near the inlet

40 point on psychrometric chart corresponding to second fluid at or near the outlet

41 saturation curve

42 point on psychrometric chart corresponding to second fluid at the cooling coil surface at or near the inlet of secondary duct

43 point on psychrometric chart corresponding to second fluid at the cooling coil surface at or near the outlet of secondary duct

44 intersection point corresponding to average coil surface temperature

45 dry bulb temperature, enthalpy

46 humidity ratio (absolute humidity)

47 neural network

48 input neuron

49 output neuron

50 first layer of neurons

51 second layer of neurons

52 - 55 neurons of the first layer

56 - 59 neurons of the second layer

## Claims

1. A method of operating a thermal energy exchanger (1) for exchanging thermal energy between a first fluid flowing through the thermal energy exchanger (1) in a first duct (4) and a second fluid flowing through the thermal energy exchanger (1) in a second duct (5), the method comprising the steps of:

    recording in a control system (12, 19, 22) a plurality of measurement data sets, each of the measurement data sets including for a different point in time values of flow ($\varphi_{4/5}$) of the first and second fluids and a value of a dehumidification rate (DHu) of the second fluid;

    the control system (12, 19, 22) computing for each of the measurement data sets normalized values of flow ($\varphi_{norm,4/5}$) as functions of the values of flow ($\varphi_{4/5}$) of the measurement data set and associating the normalized values of flow with the measurement data set;

    the control system (12, 19, 22) computing for each of the measurement data sets at least one normalization variable ($DHu_{max,ideal}$) as a function of the dehumidification rate (DHu) of the measurement data set and associating the at least one normalization variable ($DHu_{max,ideal}$) with the measurement data set;

    the control system (12, 19, 22) computing for each of the measurement data sets a value of heat exchanger effectiveness (HXeff) by relating the value of the dehumidification rate (DHu) of the measurement data set to the at least one normalization variable ($DHu_{max,ideal}$) associated with the measurement data set and associating the heat exchanger effectiveness (HXeff) with the measurement data set;

    the control system (12, 19, 22) computing for each of the measurement data sets normalized data points ($\varphi_{norm,4/5}$,HXeff) defined by the values of normalized flow ($\varphi_{norm,4/5}$) associated with the measurement data set and by the value of heat exchanger effectiveness (HXeff) associated with the measurement data set; and

    the control system (12, 19, 22) determining for the thermal energy exchanger (1) a characteristic transfer function (37) which fits the normalized data points ($\varphi_{norm4/5}$,HXeff).

2. The method according to claim 1, wherein the first duct (4) comprises an inlet and an outlet and wherein the first fluid flows in the first duct (4) from the inlet to the outlet, the method additionally comprising the steps of:

recording in a control system (12, 19, 22) a plurality of measurement data sets, each of the measurement data sets including for a different point in time values of flow ($\varphi_{4/5}$) of the first and second fluids and a value of inlet temperature (TFI) of the first fluid and a value of a dehumidification rate (DHu) of the second fluid; and
the control system (12, 19, 22) computing for each of the measurement data sets at least one normalization variable ($DHu_{max,ideal}$) as a function of the values of flow ($\varphi_{4/5}$) of the measurement data set and as a function of the value of inlet temperature (TFI) of the measurement data set and associating the at least one normalization variable ($DHu_{max,ideal}$) with the measurement data set.

3. The method according to any of the claims 1 to 2, the method additionally comprising the steps of:

recording in a control system (12, 19, 22) a plurality of measurement data sets, each of the measurement data sets including for a different point in time values of flow ($\varphi_{4/5}$) of the first and second fluids and a value of pressure (pAir) of the second fluid and a value of a dehumidification rate (DHu) of the second fluid; and
the control system (12, 19, 22) computing for each of the measurement data sets at least one normalization variable ($DHu_{max,ideal}$) as a function of the values of flow ($\varphi_{4/5}$) of the measurement data set and as a function of the value of pressure (pAir) of the measurement data set and associating the at least one normalization variable ($DHu_{max,ideal}$) with the measurement data set.

4. The method according to any of the claims 1 to 3, the method additionally comprising the steps of:

the control system (12, 19, 22) employing the characteristic transfer function (37) to compute a maximum flow rate (25); and
the control system (12, 19, 22) operating the thermal energy exchanger (1) at flow rates ($\varphi_4$) of the first fluid flowing through the thermal energy exchanger (1) in the first duct (4) below the maximum flow rate (25).

5. The method according to any of the claims 1 to 3, the method additionally comprising the steps of:

the control system (12, 19, 22) employing the characteristic transfer function (37) to compute a maximum flow rate (25); and
the control system (12, 19, 22) operating the thermal energy exchanger (1) at flow rates ($\varphi_5$) of the second fluid flowing through the thermal energy exchanger (1) in the second duct (5) below the maximum flow rate (25).

6. The method according to any of the claims 1 to 5, wherein the thermal energy exchanger (1) comprises a first flow sensor (8) secured relative to the first duct (4) and configured to produce first flow signals indicative of flow of the first fluid in the first duct (4) and a second flow sensor (11) secured relative to the second duct (5) and configured to produce second flow signals indicative of flow of the second fluid in the second duct (5), wherein the first flow sensor (8) and the second flow sensor (11) are communicatively coupled to the control system (12, 19, 22), the method additionally comprising the steps of:

the control system (12, 19, 22) reading first flow signals from the first flow sensor (8);
the control system (12, 19, 22) reading second flow signals from the second flow sensor (11);
the control system (12, 19, 22) producing values of flow ($\varphi_{4/5}$) of the first and second fluids from the first flow signals and from the second flow signals; and
recording in the control system (12, 19, 22) a plurality of measurement data sets, each of the measurement data sets including for a different point in time values of flow ($\varphi_{4/5}$) produced by the control system (12, 19, 22) and a value of a dehumidification rate (DHu) of the second fluid.

7. The method according to any of the claims 1 to 5, wherein the second duct (5) comprises an inlet and an outlet and wherein the second fluid flows in the second duct (5) from the inlet to the outlet, wherein the thermal energy exchanger (1) comprises a second flow sensor (11) secured relative to the second duct (5) and configured to produce second flow signals indicative of flow of the second fluid in the second duct (5), and a second inlet sensor (9) secured relative to the inlet of the second duct (5) and configured to produce second inlet temperature signals indicative of temperature of the second fluid, and a second outlet sensor (10) secured relative to the outlet of the second duct (5) and configured to produce second outlet temperature signals indicative of temperature of the second fluid, wherein the second flow sensor (11), the second inlet sensor (9), and the second outlet sensor (10) are communicatively coupled to the control system (12, 19, 22),
the method additionally comprising the steps of:

the control system (12, 19, 22) reading second flow signals from the second flow sensor (11) and second inlet temperature signals from the second inlet sensor (9) and second outlet temperature signals from the second outlet sensor (10);
the control system (12, 19, 22) producing values of thermal energy exchanged ($Q_{4/5}$) in the thermal energy exchanger (1) between the first fluid and the second fluid from the second flow signals and from the second inlet temperature signals and from the second outlet temperature signals; and
recording in the control system (12, 19, 22) a plurality of measurement data sets, each of the measurement data sets including for a different point in time values of flow ($\varphi_{4/5}$) of the first and second fluids and a value of the heat exchanged ($Q_{4/5}$) produced by the control system (12, 19, 22) and a value of a dehumidification rate (DHu) of the second fluid.

8. The method according to any of the claims 6 to 7, wherein a connection with a noise cancellation filter communicatively couples the second flow sensor (11) to the control system (12, 19, 22),
the method additionally comprising the steps of:

the noise cancellation filter reading second flow signals from the second flow sensor (11) and cancelling second flow signals indicative of zero flow or of flow below a predetermined threshold for flow; and
the control system (12, 19, 22) reading second flow signals passing the noise cancellation filter.

9. The method according to any of the claims 6 to 8, wherein a three-way connection with a three-way filter communicatively couples the second inlet sensor (9) and the second outlet sensor (10) to the control system (12, 19, 22),
the method additionally comprising the steps of:

the three-way filter reading second inlet temperature signals from the second inlet sensor (9) and second outlet temperature signals from the second outlet sensor (10) and forming sets of signals, each set comprising a read second inlet temperature signal and a read second outlet temperature signal, and cancelling sets of signals wherein the read first inlet temperature signal and the read second inlet temperature signal differ by less than a predetermined threshold for differential temperature; and
the control system (12, 19, 22) reading second inlet signals and second outlet signals passing the three-way filter.

10. The method according to any of the claims 1 to 9, wherein the first duct (4) comprises an inlet and an outlet and wherein the first fluid flows in the first duct (4) from the inlet to the outlet, wherein the second duct (5) comprises an inlet and an outlet and wherein the second fluid flows in the second duct (5) from the inlet to the outlet, wherein the thermal energy exchanger (1) comprises a first flow sensor (8) secured relative to the first duct (4) and configured to produce first flow signals indicative of flow of the first fluid in the first duct (4) and a second flow sensor (11) secured relative to the second duct (5) and configured to produce second flow signals indicative of flow of the second fluid in the second duct (5), and a first inlet sensor (6) secured relative to the inlet of the first duct (4) and configured to produce first inlet temperature signals indicative of temperature of the first fluid, and a second inlet sensor (9) secured relative to the inlet of the second duct (5) and configured to produce second inlet temperature signals indicative of temperature of the second fluid, and a second outlet sensor (10) secured relative to the outlet of the second duct (5) and configured to produce second outlet temperature signals indicative of temperature of the second fluid, wherein the second flow sensor (11), the first inlet sensor (6), the second inlet sensor (9), and the second outlet sensor (10) are communicatively coupled to the control system (12, 19, 22),
the method additionally comprising the steps of:

the control system (12, 19, 22) reading first flow signals from the first flow sensor (8) and second flow signals from the second flow sensor (11) and first inlet temperature signals from the first inlet sensor (6) and second inlet temperature signals from the second inlet sensor (9) and second outlet temperature signals from the second outlet sensor (10);
the control system (12, 19, 22) producing values of flow $\varphi_{(4/5)}$ of the first and second fluids from the first flow signals and from the second flow signals and producing values of thermal energy exchanged ($Q_{4/5}$) in the thermal energy exchanger (1) between the first fluid and the second fluid from the second flow signals and from the second inlet temperature signals and from the second outlet temperature signals and producing values of temperature (TFI) of the first fluid from the first inlet temperature signals; and
recording in the control system (12, 19, 22) a plurality of measurement data sets, each of the measurement data sets including for a different point in time values of flow ($\varphi_{4/5}$) produced by the control system (12, 19, 22) and a value of the heat exchanged ($Q_{4/5}$) produced by the control system (12, 19, 22) and a value of temperature (TFI) produced by the control system (12, 19, 22) and a value of a dehumidification rate (DHu) of the second fluid.

11. The method according to any of the claims 1 to 10, wherein the second duct (5) comprises an inlet and an outlet and wherein the second fluid flows in the second duct (5) from the inlet to the outlet, wherein the thermal energy exchanger (1) comprises a first flow sensor (8) secured relative to the first duct (4) and configured to produce first flow signals indicative of flow of the first fluid in the first duct (4) and a second flow sensor (11) secured relative to the second duct (5) and configured to produce second flow signals indicative of flow of the second fluid in the second duct (5), and a second inlet sensor (9) secured relative to the inlet of the second duct (5) and configured to produce second inlet temperature signals indicative of temperature of the second fluid, and a second outlet sensor (10) secured relative to the outlet of the second duct (5) and configured to produce second outlet temperature signals indicative of temperature of the second fluid, and a second humidity sensor (9; 10) secured relative to the second duct (5) and configured to produce second humidity signals indicative of humidity of the second fluid in the second duct (5), wherein the second flow sensor (11), the second inlet sensor (9), the second outlet sensor (10), and the second humidity sensor are communicatively coupled to the control system (12, 19, 22),
the method additionally comprising the steps of:

the control system (12, 19, 22) reading first flow signals from the first flow sensor (8) and reading second flow signals from the second flow sensor (11) and second inlet temperature signals from the second inlet sensor (9) and second outlet temperature signals from the second outlet sensor (10) and second humidity signals from the second humidity sensor (6);
the control system (12, 19, 22) producing values of flow ($\varphi_{4/5}$) of the first and second fluids from the first flow signals and from the second flow signals and producing values of thermal energy exchanged ($Q_{4/5}$) in the thermal energy exchanger (1) between the first fluid and the second fluid from the second flow signals and from the second inlet temperature signals and from the second outlet temperature signals and producing values indicative of a dehumidification rate (DHu) from the second humidity signals; and
recording in the control system (12, 19, 22) a plurality of measurement data sets, each of the measurement data sets including for a different point in time values of flow ($\varphi_{4/5}$) produced by the control system (12, 19, 22) and a value of the heat exchanged ($Q_{4/5}$) produced by the control system (12, 19, 22) and a value of a dehumidification rate (DHu) produced by the control system (12, 19, 22).

12. A computer program product comprising a non-transient computer-readable medium having stored thereon computer program code configured to control a processor of a control system (12, 19, 22) for operating a thermal energy exchanger (1) for exchanging thermal energy between a first fluid flowing through the thermal energy exchanger (1) in a first duct (4) and a second fluid flowing through the thermal energy exchanger (1) in a second duct (5), the processor performs the following steps:

recording in a control system (12, 19, 22) a plurality of measurement data sets, each of the measurement data sets including for a different point in time values of flow ($\varphi_{4/5}$) of the first and second fluids and a value of a dehumidification rate (DHu) of the second fluid;
the control system (12, 19, 22) computing for each of the measurement data sets normalized values of flow ($\varphi_{norm,4/5}$) as functions of the values of flow ($\varphi_{4/5}$) of the measurement data set and associating the normalized values of flow with the measurement data set;
the control system (12, 19, 22) computing for each of the measurement data sets at least one normalization variable ($DHu_{max,ideal}$) as a function of the dehumidification rate (DHu) of the measurement data set and associating the at least one normalization variable ($DHu_{max,ideal}$) with the measurement data set;
the control system (12, 19, 22) computing for each of the measurement data sets a value of heat exchanger effectiveness (HXeff) by relating the value of the dehumidification rate (DHu) of the measurement data set to the at least one normalization variable ($DHu_{max,ideal}$) associated with the measurement data set and associating the heat exchanger effectiveness (HXeff) with the measurement data set;
the control system (12, 19, 22) computing for each of the measurement data sets normalized data points ($\varphi_{norm,4/5}$, HXeff) defined by the values of normalized flow ($\varphi_{norm,4/5}$) associated with the measurement data set and by the value of heat exchanger effectiveness (HXeff) associated with the measurement data set; and
the control system (12, 19, 22) determining for the thermal energy exchanger (1) a characteristic transfer function (37) which fits the normalized data points ($\varphi_{norm,4/5}$, HXeff).

13. The computer program product according to claim 12, wherein psychrometric data are stored on the non-transient computer-readable medium and wherein the second duct (5) comprises an inlet and an outlet and wherein the second fluid flows in the second duct (5) from the inlet to the outlet, the processor performs the following additional steps:

recording in a control system (12, 19, 22) a plurality of measurement data sets, each of the measurement data sets including for a different point in time values of flow ($\varphi_{4/5}$) of the first and second fluids and a value of the heat exchanged ($Q_{4/5}$) between the first fluid and the second fluid and a value of inlet temperature (Tin) and a value of outlet temperature (TOut) and a value of a dehumidification rate (DHu) of the second fluid; and
the control system (12, 19, 22) employing for each of the measurement data sets the psychrometric data (39 - 46) to compute the at least one normalization variable ($Q_{max,ideal}$, $Q_{max,est}$, $DHu_{max,ideal}$) as a function of the values of flow ($\varphi_{4/5}$) of the measurement data set and as a function of the value of inlet temperature (Tin) of the measurement data set and as a function of the value of outlet temperature (TOut) of the measurement data set and associating the at least one normalization variable ($Q_{max,ideal}$, $Q_{max,est}$, $DHu_{max,ideal}$) with the measurement data set.

14. The computer program product according to any of the claims 12 to 13, wherein a predefined flow threshold value is stored on the non-transient computer-readable medium, the processor performs the following additional steps:

the control system (12, 19, 22) comparing for each measurement data set each of the values of flow ($\varphi_{4/5}$) to the predefined flow threshold value; and
the control system (12, 19, 22) cancelling each measurement data set wherein at least one of the values of flow ($\varphi_{4/5}$) is below the predefined flow threshold value.

15. The computer program product according to any of the claims 12 to 14, wherein a predefined thermal heat transfer threshold value is stored on the non-transient computer-readable medium, the processor performs the following additional steps:

the control system (12, 19, 22) comparing for each measurement data set the value of the heat exchanged ($Q_{4/5}$) to the predefined thermal heat transfer threshold value; and
the control system (12, 19, 22) cancelling each measurement data set wherein the value of the heat exchanged ($Q_{4/5}$) is below the predefined thermal heat transfer threshold value.


**Patentansprüche**

1. Verfahren zum Betreiben eines Wärmetauschers (1) zum Austauschen von Wärme zwischen einem ersten Fluid, das in einem ersten Kanal (4) durch den Wärmetauscher (1) strömt, und einem zweiten Fluid, das in einem zweiten Kanal (5) durch den Wärmetauscher (1) strömt, wobei das Verfahren folgende Schritte umfasst:

Aufzeichnen mehrerer Messdatensätze, von denen jeder für einen anderen Zeitpunkt Durchflusswerte ($\varphi_{4/5}$) für das erste und das zweite Fluid und einen Wert für eine Entfeuchtungsleistung (DHu) des zweiten Fluids umfasst, in einem Steuer- und/oder Regelsystem (12, 19, 22);
für jeden der Messdatensätze Berechnen normierter Durchflusswerte ($\varphi_{norm,4/5}$) in Abhängigkeit von den Durchflusswerten ($\varphi_{4/5}$) in dem Messdatensatz und Verknüpfen der normierten Durchflusswerte mit dem Messdatensatz durch das Steuer- und/oder Regelsystem (12, 19, 22);
für jeden der Messdatensätze Berechnen mindestens einer Normierungsvariablen ($DHu_{max,ideal}$) in Abhängigkeit von der Entfeuchtungsleistung (DHu) des Messdatensatzes und Verknüpfen der mindestens einen Normierungsvariablen ($DHu_{max,ideal}$) mit dem Messdatensatz durch das Steuer- und/oder Regelsystem (12, 19, 22) ;
für jeden der Messdatensätze Berechnen eines Werts für einen Wärmetauscherwirkungsgrad (HXeff) durch Zuordnen des Werts für die Entfeuchtungsleistung (DHu) des Messdatensatzes zu der mindestens einen mit dem Messdatensatz verknüpften Normierungsvariablen ($DHu_{max,ideal}$) und Verknüpfen des Wärmetauscherwirkungsgrads (HXeff) mit dem Messdatensatz durch das Steuer- und/oder Regelsystem (12, 19, 22);
für jeden der Messdatensätze Berechnen von normierten Datenpunkten ($\varphi_{norm,4/5}$, HXeff), die durch die mit dem Messdatensatz verknüpften Werte für den normierten Durchfluss ($\varphi_{norm,4/5}$) und den mit dem Messdatensatz verknüpften Wert für den Wärmetauscherwirkungsgrad (HXeff) definiert sind, durch das Steuer- und/oder Regelsystem (12, 19, 22); und
Bestimmen einer charakteristischen Übertragungsfunktion (37) für den Wärmetauscher (1), die an die normierten Datenpunkte ($\varphi_{norm,4/5}$, HXeff) angepasst ist, durch das Steuer- und/oder Regelsystem (12, 19, 22).

**2.** Das Verfahren nach Anspruch 1, wobei der erste Kanal (4) einen Einlass und einen Auslass umfasst und das erste Fluid in dem ersten Kanal (4) vom Einlass zum Auslass strömt, wobei das Verfahren zusätzlich folgende Schritte umfasst:

Aufzeichnen mehrerer Messdatensätze, von denen jeder für einen anderen Zeitpunkt Durchflusswerte ($\varphi_{4/5}$) für das erste und das zweite Fluid und einen Wert für eine Einlasstemperatur (TFI) des ersten Fluids und einen Wert für eine Entfeuchtungsleistung (DHu) des zweiten Fluids umfasst, in einem Steuer- und/oder Regelsystem (12, 19, 22) und
für jeden der Messdatensätze Berechnen mindestens einer Normierungsvariablen ($DHu_{max,ideal}$) in Abhängigkeit von den Durchflusswerten ($\varphi_{4/5}$) im Messdatensatz und von dem Wert für die Einlasstemperatur (TFI) im Messdatensatz und Verknüpfen der mindestens einen Normierungsvariablen ($DHu_{max,ideal}$) mit dem Messdatensatz durch das Steuer- und/oder Regelsystem (12, 19, 22).

**3.** Das Verfahren nach einem der Ansprüche 1 bis 2, das zusätzlich folgende Schritte umfasst:

Aufzeichnen mehrerer Messdatensätze, von denen jeder für einen anderen Zeitpunkt Durchflusswerte ($\varphi_{4/5}$) für das erste und das zweite Fluid und einen Wert für den Druck (pAir) des zweiten Fluids und einen Wert für eine Entfeuchtungsleistung (DHu) des zweiten Fluids umfasst, in einem Steuer- und/oder Regelsystem (12, 19, 22) und
für jeden der Messdatensätze Berechnen mindestens einer Normierungsvariablen ($DHu_{max,ideal}$) in Abhängigkeit von den Durchflusswerten ($\varphi_{4/5}$) im Messdatensatz und von dem Wert für den Druck (pAir) im Messdatensatz und Verknüpfen der mindestens einen Normierungsvariablen ($DHu_{max,ideal}$) mit dem Messdatensatz durch das Steuer- und/oder Regelsystem (12, 19, 22).

**4.** Das Verfahren nach einem der Ansprüche 1 bis 3, das zusätzlich folgende Schritte umfasst:

Benutzen der charakteristischen Übertragungsfunktion (37) zum Berechnen einer maximalen Durchflussrate (25) durch das Steuer- und/oder Regelsystem (12, 19, 22) und
Betreiben des Wärmetauschers (1) bei Durchflussraten ($\varphi_4$) des in dem ersten Kanal (4) durch den Wärmetauscher (1) strömenden ersten Fluids, die unter der maximalen Durchflussrate (25) liegen, durch das Steuer- und/oder Regelsystem (12, 19, 22).

**5.** Das Verfahren nach einem der Ansprüche 1 bis 3, das zusätzlich folgende Schritte umfasst:

Benutzen der charakteristischen Übertragungsfunktion (37) zum Berechnen einer maximalen Durchflussrate (25) durch das Steuer- und/oder Regelsystem (12, 19, 22) und
Betreiben des Wärmetauschers (1) bei Durchflussraten ($\varphi_5$) des in dem zweiten Kanal (5) durch den Wärmetauscher (1) strömenden zweiten Fluids, die unter der maximalen Durchflussrate (25) liegen, durch das Steuer- und/oder Regelsystem (12, 19, 22).

**6.** Das Verfahren nach einem der Ansprüche 1 bis 5, wobei der Wärmetauscher (1) einen ersten Durchflusssensor (8) umfasst, der in Bezug auf den ersten Kanal (4) befestigt und so konfiguriert ist, dass er erste Durchflusssignale erzeugt, die einen Durchfluss des ersten Fluids in dem ersten Kanal (4) angeben, und einen zweiten Durchflusssensor (11) umfasst, der in Bezug auf den zweiten Kanal (5) befestigt und so konfiguriert ist, dass er zweite Durchflusssignale erzeugt, die einen Durchfluss des zweiten Fluids in dem zweiten Kanal (5) angeben, wobei der erste Durchflusssensor (8) und der zweite Durchflusssensor (11) zur Kommunikation mit dem Steuer- und/oder Regelsystem (12, 19, 22) gekoppelt sind,
wobei das Verfahren zusätzlich folgende Schritte umfasst:

Auslesen erster Durchflusssignale aus dem ersten Durchflusssensor (8) durch das Steuer- und/oder Regelsystem (12, 19, 22),
Auslesen zweiter Durchflusssignale aus dem zweiten Durchflusssensor (11) durch das Steuer- und/oder Regelsystem (12, 19, 22),
Erzeugen von Durchflusswerten ($\varphi_{4/5}$) für das erste und das zweite Fluid aus den ersten und den zweiten Durchflusssignalen durch das Steuer- und/oder Regelsystem (12, 19, 22) und
Aufzeichnen mehrerer Messdatensätze, von denen jeder für einen anderen Zeitpunkt von dem Steuer- und/oder Regelsystem (12, 19, 22) erzeugte Durchflusswerte ($\varphi_{4/5}$) und einen Wert für eine Entfeuchtungsleistung (DHu) des zweiten Fluids umfasst, in dem Steuer- und/oder Regelsystem (12, 19, 22).

**7.** Das Verfahren nach einem der Ansprüche 1 bis 5, wobei der zweite Kanal (5) einen Einlass und einen Auslass umfasst und das zweite Fluid in dem zweiten Kanal (5) vom Einlass zum Auslass strömt, wobei der Wärmetauscher (1) einen zweiten Durchflusssensor (11) umfasst, der in Bezug auf den zweiten Kanal (5) befestigt und so konfiguriert ist, dass er zweite Durchflusssignale erzeugt, die einen Durchfluss des zweiten Fluids in dem zweiten Kanal (5) angeben, und einen zweiten Einlasssensor (9), der in Bezug auf den Einlass des zweiten Kanals (5) befestigt und so konfiguriert ist, dass er zweite Einlasstemperatursignale erzeugt, die eine Temperatur des zweiten Fluids angeben, und einen zweiten Auslasssensor (10) umfasst, der in Bezug auf den Auslass des zweiten Kanals (5) befestigt und so konfiguriert ist, dass er zweite Auslasstemperatursignale erzeugt, die eine Temperatur des zweiten Fluids angeben, wobei der zweite Durchflusssensor(11), der zweite Einlasssensor (9) und der zweite Auslasssensor (10) zur Kommunikation mit dem Steuer- und/oder Regelsystem (12, 19, 22) gekoppelt sind, wobei das Verfahren zusätzlich folgende Schritte umfasst:

Auslesen zweiter Durchflusssignale aus dem zweiten Durchflusssensor (11) und zweiter Einlasstemperatursignale aus dem zweiten Einlasssensor (9) und zweiter Auslasstemperatursignale aus dem zweiten Auslasssensor (10) durch das Steuer- und/oder Regelsystem (12, 19, 22),
Erzeugen von Werten für die in dem Wärmetauscher (1) zwischen dem ersten und dem zweiten Fluid ausgetauschte Wärmeenergie ($Q_{4/5}$) aus den zweiten Durchflusssignalen und den zweiten Einlasstemperatursignalen und den zweiten Auslasstemperatursignalen durch das Steuer- und/oder Regelsystem (12, 19, 22) und
Aufzeichnen mehrerer Messdatensätze, von denen jeder für einen anderen Zeitpunkt von dem Steuer- und/oder Regelsystem (12, 19, 22) erzeugte Durchflusswerte ($\varphi_{4/5}$) für das erste und das zweite Fluid und einen Wert für eine Entfeuchtungsleistung (DHu) des zweiten Fluids umfasst, in dem Steuer- und/oder Regelsystem (12, 19, 22).

**8.** Das Verfahren nach einem der Ansprüche 6 bis 7, wobei eine Verbindung mit einem Rauschunterdrückungsfilter den zweiten Durchflusssensor (11) zur Kommunikation an das Steuer- und/oder Regelsystem (12, 19, 22) koppelt, wobei das Verfahren zusätzlich folgende Schritte umfasst:

Auslesen zweiter Durchflusssignale aus dem zweiten Durchflusssensor (11) und Unterdrücken zweiter Durchflusssignale, die einen bei null oder unter einem vorgegebenen Grenzwert für den Durchfluss liegenden Durchfluss angeben, durch das Rauschunterdrückungsfilter und
Auslesen zweiter Durchflusssignale, die das Rauschunterdrückungsfilter passieren, durch das Steuer- und/oder Regelsystem (12, 19, 22).

**9.** Das Verfahren nach einem der Ansprüche 6 bis 8, wobei eine Dreiwegeverbindung mit einem Dreiwegefilter den zweiten Einlasssensor (9) und den zweiten Auslasssensor (10) zur Kommunikation an das Steuer- und/oder Regelsystem (12, 19, 22) koppelt, wobei das Verfahren zusätzlich folgende Schritte umfasst:

Auslesen von zweiten Einlasstemperatursignalen aus dem zweiten Einlasssensor (9) und von zweiten Auslasstemperatursignalen aus dem zweiten Auslasssensor (10) und Bilden von Signalsätzen, wobei jeder Satz ein ausgelesenes zweites Einlasstemperatursignal und ein ausgelesenes zweites Auslasstemperatursignal umfasst, sowie Unterdrücken von Signalsätzen durch das Dreiwegefilter, wobei sich das ausgelesene erste und zweite Einlasstemperatursignal um weniger als einen vorgegebenen Grenzwert für die Temperaturdifferenz voneinander unterscheiden, und
Auslesen von zweiten Einlasssignalen und zweiten Auslasssignalen, die das Dreiwegefilter passieren, durch das Steuer- und/oder Regelsystem (12, 19, 22).

**10.** Das Verfahren nach einem der Ansprüche 1 bis 9, wobei der erste Kanal (4) einen Einlass und einen Auslass umfasst und das erste Fluid in dem ersten Kanal (4) vom Einlass zum Auslass strömt, wobei der zweite Kanal (5) einen Einlass und einen Auslass umfasst und das zweite Fluid in dem zweiten Kanal (5) vom Einlass zum Auslass strömt, wobei der Wärmetauscher (1) einen ersten Durchflusssensor (8) umfasst, der in Bezug auf den ersten Kanal (4) befestigt und so konfiguriert ist, dass er erste Durchflusssignale erzeugt, die einen Durchfluss des ersten Fluids in dem ersten Kanal (4) angeben, und einen zweiten Durchflusssensor (11), der in Bezug auf den zweiten Kanal (5) befestigt und so konfiguriert ist, dass er zweite Durchflusssignale erzeugt, die einen Durchfluss des zweiten Fluids in dem zweiten Kanal (5) angeben, und einen ersten Einlasssensor (6), der in Bezug auf den Einlass des ersten Kanals (4) befestigt und so konfiguriert ist, dass er erste Einlasstemperatursignale erzeugt, die eine Temperatur des ersten Fluids angeben, und einen zweiten Einlasssensor (9), der in Bezug auf den Einlass des zweiten Kanals (5) befestigt und so konfiguriert ist, dass er zweite Einlasstemperatursignale erzeugt, die eine Temperatur des zweiten Fluids angeben, und einen zweiten Auslasssensor (10) umfasst, der in Bezug auf den Auslass des zweiten Kanals (5) befestigt und so konfiguriert ist, dass er zweite Auslasstemperatursignale erzeugt, die eine Temperatur des zweiten Fluids angeben, wobei der zweite Durchflusssensor (11), der erste Einlasssensor (6), der zweite Einlasssensor (9) und der zweite Auslasssensor (10) zur Kommunikation mit dem Steuer- und/oder Regelsystem (12, 19, 22) gekoppelt sind,
wobei das Verfahren zusätzlich folgende Schritte umfasst:

Auslesen erster Durchflusssignale aus dem ersten Durchflusssensor (8) und zweiter Durchflusssignale aus dem zweiten Durchflusssensor (11) und erster Einlasstemperatursignale aus dem ersten Einlasssensor (6) und zweiter Einlasstemperatursignale aus dem zweiten Einlasssensor (9) und zweiter Auslasstemperatursignale aus dem zweiten Auslasssensor (10) durch das Steuer- und/oder Regelsystem (12, 19, 22),
Erzeugen von Durchflusswerten ($\varphi_{4/5}$) für das erste und das zweite Fluid aus den ersten und den zweiten Durchflusssignalen und Erzeugen von Werten für die in dem Wärmetauscher (1) zwischen dem ersten und dem zweiten Fluid ausgetauschte Wärmeenergie ($Q_{4/5}$) aus den zweiten Durchflusssignalen und den zweiten Einlasstemperatursignalen und den zweiten Auslasstemperatursignalen und Erzeugen von Temperaturwerten (TFI) für das erste Fluid aus den ersten Einlasstemperatursignalen durch das Steuer- und/oder Regelsystem (12, 19, 22) und
Aufzeichnen mehrerer Messdatensätze, von denen jeder für einen anderen Zeitpunkt von dem Steuer- und/oder Regelsystem (12, 19, 22) erzeugte Durchflusswerte ($\varphi_{4/5}$) und einen von dem Steuer- und/oder Regelsystem (12, 19, 22) erzeugten Wert für die ausgetauschte Wärme ($Q_{4/5}$) und einen von dem Steuer- und/oder Regelsystem (12, 19, 22) erzeugten Temperaturwert (TFI) und einen Wert für eine Entfeuchtungsleistung (DHu) des zweiten Fluids umfasst, in dem Steuer- und/oder Regelsystem (12, 19, 22).

11. Das Verfahren nach einem der Ansprüche 1 bis 10, wobei der zweite Kanal (5) einen Einlass und einen Auslass umfasst und das zweite Fluid in dem zweiten Kanal (5) vom Einlass zum Auslass strömt, wobei der Wärmetauscher (1) einen ersten Durchflusssensor (8) umfasst, der in Bezug auf den ersten Kanal (4) befestigt und so konfiguriert ist, dass er erste Durchflusssignale erzeugt, die einen Durchfluss des ersten Fluids in dem ersten Kanal (4) angeben, und einen zweiten Durchflusssensor (11), der in Bezug auf den zweiten Kanal (5) befestigt und so konfiguriert ist, dass er zweite Durchflusssignale erzeugt, die einen Durchfluss des zweiten Fluids in dem zweiten Kanal (5) angeben, und einen zweiten Einlasssensor (9), der in Bezug auf den Einlass des zweiten Kanals (5) befestigt und so konfiguriert ist, dass er zweite Einlasstemperatursignale erzeugt, die eine Temperatur des zweiten Fluids angeben, und einen zweiten Auslasssensor (10), der in Bezug auf den Auslass des zweiten Kanals (5) befestigt und so konfiguriert ist, dass er zweite Auslasstemperatursignale erzeugt, die eine Temperatur des zweiten Fluids angeben, und einen zweiten Feuchtesensor (9; 10) umfasst, der in Bezug auf den zweiten Kanal (5) befestigt und so konfiguriert ist, dass er zweite Feuchtesignale erzeugt, die eine Feuchte des zweiten Fluids im zweiten Kanal (5) angeben, wobei der zweite Durchflusssensor (11), der zweite Einlasssensor (9), der zweite Auslasssensor (10) und der zweite Feuchtesensor zur Kommunikation mit dem Steuer- und/oder Regelsystem (12, 19, 22) gekoppelt sind,
wobei das Verfahren zusätzlich folgende Schritte umfasst:

Auslesen erster Durchflusssignale aus dem ersten Durchflusssensor (8) und zweiter Durchflusssignale aus dem zweiten Durchflusssensor (11) und zweiter Einlasstemperatursignale aus dem zweiten Einlasssensor (9) und zweiter Auslasstemperatursignale aus dem zweiten Auslasssensor (10) und zweiter Feuchtesignale aus dem zweiten Feuchtesensor (6) durch das Steuer- und/oder Regelsystem (12, 19, 22),
Erzeugen von Durchflusswerten ($\varphi_{4/5}$) für das erste und das zweite Fluid aus den ersten und den zweiten Durchflusssignalen und Erzeugen von Werten für die in dem Wärmetauscher (1) zwischen dem ersten und dem zweiten Fluid ausgetauschte Wärmeenergie ($Q_{4/5}$) aus den zweiten Durchflusssignalen und den zweiten Einlasstemperatursignalen und den zweiten Auslasstemperatursignalen und Erzeugen von eine Entfeuchtungsleistung (DHu) angebenden Werten aus den zweiten Feuchtesignalen durch das Steuer- und/oder Regelsystem (12, 19, 22) und
Aufzeichnen mehrerer Messdatensätze, von denen jeder für einen anderen Zeitpunkt von dem Steuer- und/oder Regelsystem (12, 19, 22) erzeugte Durchflusswerte ($\varphi_{4/5}$) und einen von dem Steuer- und/oder Regelsystem (12, 19, 22) erzeugten Wert für die ausgetauschte Wärme ($Q_{4/5}$) und einen von dem Steuer- und/oder Regelsystem (12, 19, 22) erzeugten Wert für eine Entfeuchtungsleistung (DHu) umfasst, in dem Steuer- und/oder Regelsystem (12, 19, 22).

12. Computerprogrammprodukt mit einem nichtflüchtigen, computerlesbaren Medium, auf dem Computerprogrammcode gespeichert ist, der so konfiguriert ist, dass er einen Prozessor eines Steuer- und/oder Regelsystems (12, 19, 22) dazu veranlasst, einen Wärmetauscher (1) zum Austauschen von Wärmeenergie zwischen einem in einem ersten Kanal (4) durch den Wärmetauscher (1) strömenden ersten Fluid und einem in einem zweiten Kanal (5) durch den Wärmetauscher (1) strömenden zweiten Fluid zu betreiben, wobei der Prozessor folgende Schritte ausführt:

Aufzeichnen mehrerer Messdatensätze, von denen jeder für einen anderen Zeitpunkt Durchflusswerte ($\varphi_{4/5}$) für das erste und das zweite Fluid und einen Wert für eine Entfeuchtungsleistung (DHu) des zweiten Fluids umfasst, in dem Steuer- und/oder Regelsystem (12, 19, 22),

für jeden der Messdatensätze Berechnen normierter Durchflusswerte ($\varphi_{norm,4/5}$) in Abhängigkeit von den Durchflusswerten ($\varphi_{4/5}$) in dem Messdatensatz und Verknüpfen der normierten Durchflusswerte mit dem Messdatensatz durch das Steuer- und/oder Regelsystem (12, 19, 22),

für jeden der Messdatensätze Berechnen mindestens einer Normierungsvariablen ($DHu_{max,ideal}$) in Abhängigkeit von der Entfeuchtungsleistung (DHu) im Messdatensatz und Verknüpfen der mindestens einen Normierungsvariablen ($DHu_{max,ideal}$) mit dem Messdatensatz durch das Steuer- und/oder Regelsystem (12, 19, 22),

für jeden der Messdatensätze Berechnen eines Werts für den Wärmetauscherwirkungsgrad (HXeff) durch Zuordnen des Werts für die Entfeuchtungsleistung (DHu) in dem Messdatensatz zu der mindestens einen mit dem Messdatensatz verknüpften Normierungsvariablen ($DHu_{max,ideal}$) und Verknüpfen des Wärmetauscherwirkungsgrads (HXeff) mit dem Messdatensatz durch das Steuer- und/oder Regelsystem (12, 19, 22),

für jeden der Messdatensätze Berechnen von normierten Datenpunkten ($\varphi_{norm,4/5}$, HXeff), die durch die mit dem Messdatensatz verknüpften Werte für den normierten Durchfluss ($\varphi_{norm,4/5}$) und den mit dem Messdatensatz verknüpften Wert für den Wärmetauscherwirkungsgrad (HXeff) definiert sind, durch das Steuer- und/oder Regelsystem (12, 19, 22) und

Bestimmen einer charakteristischen Übertragungsfunktion (37) für den Wärmetauscher (1), die zu den normierten Datenpunkten ($\varphi_{norm,4/5}$, HXeff) passt, durch das Steuer- und/oder Regelsystem (12, 19, 22).

13. Computerprogrammprodukt nach Anspruch 12, wobei psychrometrische Daten auf dem nichtflüchtigen, computerlesbaren Medium gespeichert sind und der zweite Kanal (5) einen Einlass und einen Auslass umfasst und das zweite Fluid in dem zweiten Kanal (5) vom Einlass zum Auslass strömt, wobei der Prozessor die folgenden zusätzlichen Schritte ausführt:

Aufzeichnen mehrerer Messdatensätze, von denen jeder für einen anderen Zeitpunkt Durchflusswerte ($\varphi_{4/5}$) für das erste und das zweite Fluid und einen Wert für die zwischen dem ersten und dem zweiten Fluid ausgetauschte Wärme ($Q_{4/5}$) und einen Wert für eine Einlasstemperatur (TFI) und einen Wert für eine Auslasstemperatur (TOut) und einen Wert für eine Entfeuchtungsleistung (DHu) des zweiten Fluids umfasst, in einem Steuer- und/oder Regelsystem (12, 19, 22) und

Benutzen der psychrometrischen Daten (39 bis 46) für jeden der Messdatensätze zum Berechnen der mindestens einen Normierungsvariablen ($Q_{max,ideal}$, $Q_{max,est}$, $DHu_{max,ideal}$) in Abhängigkeit von den Durchflusswerten ($\varphi_{4/5}$) im Messdatensatz und von dem Wert für die Einlasstemperatur (TFI) im Messdatensatz und von dem Wert für die Auslasstemperatur (TOut) im Messdatensatz und Verknüpfen der mindestens einen Normierungsvariablen ($Q_{max,ideal}$, $Q_{max,est}$, $DHu_{max,ideal}$) mit dem Messdatensatz durch das Steuer- und/oder Regelsystem (12, 19, 22).

14. Computerprogrammprodukt nach einem der Ansprüche 12 bis 13, wobei ein vorgegebener Durchflussgrenzwert auf dem nichtflüchtigen, computerlesbaren Medium gespeichert ist, wobei der Prozessor die folgenden zusätzlichen Schritte ausführt:

Vergleichen jedes Durchflusswerts ($\varphi_{4/5}$) mit dem vorgegebenen Durchflussgrenzwert für jeden Messdatensatz durch das Steuer- und/oder Regelsystem (12, 19, 22) und

Unterdrücken jedes Messdatensatzes, bei dem mindestens einer der Durchflusswerte ($\varphi_{4/5}$) unter dem vorgegebenen Durchflussgrenzwert liegt, durch das Steuer- und/oder Regelsystem (12, 19, 22).

15. Computerprogrammprodukt nach einem der Ansprüche 12 bis 14, wobei ein vorgegebener Wärmeübertragungsgrenzwert auf dem nichtflüchtigen, computerlesbaren Medium gespeichert ist, wobei der Prozessor die folgenden zusätzlichen Schritte ausführt:

Vergleichen des Werts für die ausgetauschte Wärme ($Q_{4/5}$) mit dem vorgegebenen Wärmeübertragungsgrenzwert für jeden Messdatensatz durch das Steuer- und/oder Regelsystem (12, 19, 22) und

Unterdrücken jedes Messdatensatzes, bei dem der Wert für die ausgetauschte Wärme ($Q_{4/5}$) unter dem vorgegebenen Wärmeübertragungsgrenzwert liegt, durch das Steuer- und/oder Regelsystem (12, 19, 22).

**Revendications**

1. Procédé de fonctionnement d'un échangeur d'énergie thermique (1) pour échanger de l'énergie thermique entre un premier fluide qui s'écoule au travers de l'échangeur d'énergie thermique (1) dans un premier conduit (4) et un second fluide qui s'écoule au travers de l'échangeur d'énergie thermique (1) dans un second conduit (5),
le procédé comprenant les étapes constituées par :

   l'enregistrement, dans un système de commande (12, 19, 22), d'une pluralité de jeux de données de mesure, chacun des jeux de données de mesure incluant, pour un point temporel différent, des valeurs d'écoulement ($\varphi_{4/5}$) des premier et second fluides et une valeur d'un degré de déshumidification (DHu) du second fluide;
   le calcul, par le système de commande (12, 19, 22), pour chacun des jeux de données de mesure, de valeurs d'écoulement normalisées ($\varphi_{norm,4/5}$) en tant que fonctions des valeurs d'écoulement ($\varphi_{4/5}$) du jeu de données de mesure, et l'association, par ce même système de commande, des valeurs d'écoulement normalisées avec le jeu de données de mesure;
   le calcul, par le système de commande (12, 19, 22), pour chacun des jeux de données de mesure, d'au moins une variable de normalisation ($DHu_{max,ideal}$) en tant que fonction du degré de déshumidification (DHu) du jeu de données de mesure, et l'association, par ce même système de commande, de l'au moins une variable de normalisation ($DHu_{max,ideal}$) avec le jeu de données de mesure;
   le calcul, par le système de commande (12, 19, 22), pour chacun des jeux de données de mesure, d'une valeur d'efficacité d'échangeur thermique (HXeff) en rapportant la valeur du degré de déshumidification (DHu) du jeu de données de mesure à l'au moins une variable de normalisation ($DHu_{max,ideal}$) qui est associée avec le jeu de données de mesure, et l'association, par ce même système de commande, de l'efficacité d'échangeur thermique (HXeff) avec le jeu de données de mesure;
   le calcul, par le système de commande (12, 19, 22), pour chacun des jeux de données de mesure, de points de données normalisés ($\varphi_{norm,4/5}$, HXeff) qui sont définis par les valeurs d'écoulement normalisé ($\varphi_{norm,4/5}$) qui sont associées avec le jeu de données de mesure et par la valeur d'efficacité d'échangeur thermique (HXeff) qui est associée avec le jeu de données de mesure; et
   la détermination, par le système de commande (12, 19, 22), pour l'échangeur d'énergie thermique (1), d'une fonction de transfert caractéristique (37) qui épouse par ajustement les points de données normalisés ($\varphi_{norm,4/5}$, HXeff).

2. Le procédé selon la revendication 1, dans lequel le premier conduit (4) comprend une entrée et une sortie et dans lequel le premier fluide s'écoule dans le premier conduit (4) depuis l'entrée jusqu'à la sortie,
le procédé comprenant de façon additionnelle les étapes constituées par :

   l'enregistrement, dans un système de commande (12, 19, 22), d'une pluralité de jeux de données de mesure, chacun des jeux de données de mesure incluant, pour un point temporel différent, des valeurs d'écoulement ($\varphi_{4/5}$) des premier et second fluides et une valeur de température d'entrée (TFl) du premier fluide et une valeur d'un degré de déshumidification (DHu) du second fluide; et
   le calcul, par le système de commande (12, 19, 22), pour chacun des jeux de données de mesure, d'au moins une variable de normalisation ($DHu_{max,ideal}$) en tant que fonction des valeurs d'écoulement ($\varphi_{4/5}$) du jeu de données de mesure et en tant que fonction de la valeur de température d'entrée (TFl) du jeu de données de mesure, et l'association, par ce même système de commande, de l'au moins une variable de normalisation ($DHu_{max,ideal}$) avec le jeu de données de mesure.

3. Le procédé selon l'une quelconque des revendications 1 et 2,
le procédé comprenant de façon additionnelle les étapes constituées par :

   l'enregistrement, dans un système de commande (12, 19, 22), d'une pluralité de jeux de données de mesure, chacun des jeux de données de mesure incluant, pour un point temporel différent, des valeurs d'écoulement ($\varphi_{4/5}$) des premier et second fluides et une valeur de pression (pAir) du second fluide et une valeur d'un degré de déshumidification (DHu) du second fluide; et
   le calcul, par le système de commande (12, 19, 22), pour chacun des jeux de données de mesure, d'au moins une variable de normalisation ($DHu_{max,ideal}$) en tant que fonction des valeurs d'écoulement ($\varphi_{4/5}$) du jeu de données de mesure et en tant que fonction de la valeur de pression (pAir) du jeu de données de mesure, et l'association, par ce même système de commande, de l'au moins une variable de normalisation ($DHu_{max,ideal}$) avec le jeu de données de mesure.

**4.** Le procédé selon l'une quelconque des revendications 1 à 3,
le procédé comprenant de façon additionnelle les étapes constituées par :

l'utilisation, par le système de commande (12, 19, 22), de la fonction de transfert caractéristique (37) pour calculer un débit d'écoulement maximum (25); et
la mise en fonctionnement, par le système de commande (12, 19, 22), de l'échangeur d'énergie thermique (1) à des débits d'écoulement ($\varphi_4$) du premier fluide qui s'écoule au travers de l'échangeur d'énergie thermique (1) dans le premier conduit (4) en-deçà du débit d'écoulement maximum (25).

**5.** Le procédé selon l'une quelconque des revendications 1 à 3,
le procédé comprenant de façon additionnelle les étapes constituées par :

l'utilisation, par le système de commande (12, 19, 22), de la fonction de transfert caractéristique (37) pour calculer un débit d'écoulement maximum (25); et
la mise en fonctionnement, par le système de commande (12, 19, 22), de l'échangeur d'énergie thermique (1) à des débits d'écoulement ($\varphi_5$) du second fluide qui s'écoule au travers de l'échangeur d'énergie thermique (1) dans le second conduit (5) en-deçà du débit d'écoulement maximum (25).

**6.** Le procédé selon l'une quelconque des revendications 1 à 5, dans lequel l'échangeur d'énergie thermique (1) comprend un premier capteur d'écoulement (8) qui est fixé de façon ferme et sécurisée par rapport au premier conduit (4) et qui est configuré pour produire des premiers signaux d'écoulement qui sont indicatifs de l'écoulement du premier fluide dans le premier conduit (4) et un second capteur d'écoulement (11) qui est fixé de façon ferme et sécurisée par rapport au second conduit (5) et qui est configuré pour produire des seconds signaux d'écoulement qui sont indicatifs de l'écoulement du second fluide dans le second conduit (5), dans lequel le premier capteur d'écoulement (8) et le second capteur d'écoulement (11) sont couplés en termes de communication au système de commande (12, 19, 22),
le procédé comprenant de façon additionnelle les étapes constituées par :

la lecture, par le système de commande (12, 19, 22), de premiers signaux d'écoulement en provenance du premier capteur d'écoulement (8);
la lecture, par le système de commande (12, 19, 22), de seconds signaux d'écoulement en provenance du second capteur d'écoulement (11);
la production, par le système de commande (12, 19, 22), de valeurs d'écoulement ($\varphi_{4/5}$) des premier et second fluides à partir des premiers signaux d'écoulement et à partir des seconds signaux d'écoulement; et
l'enregistrement, dans le système de commande (12, 19, 22), d'une pluralité de jeux de données de mesure, chacun des jeux de données de mesure incluant, pour un point temporel différent, des valeurs d'écoulement ($\varphi_{4/5}$) qui sont produites par le système de commande (12, 19, 22) et une valeur d'un degré de déshumidification (DHu) du second fluide.

**7.** Le procédé selon l'une quelconque des revendications 1 à 5, dans lequel le second conduit (5) comprend une entrée et une sortie et dans lequel le second fluide s'écoule dans le second conduit (5) depuis l'entrée jusqu'à la sortie, dans lequel l'échangeur d'énergie thermique (1) comprend un second capteur d'écoulement (11) qui est fixé de façon ferme et sécurisée par rapport au second conduit (5) et qui est configuré pour produire des seconds signaux d'écoulement qui sont indicatifs de l'écoulement du second fluide dans le second conduit (5), et un second capteur d'entrée (9) qui est fixé de façon ferme et sécurisée par rapport à l'entrée du second conduit (5) et qui est configuré pour produire des seconds signaux de température d'entrée qui sont indicatifs de la température du second fluide, et un second capteur de sortie (10) qui est fixé de façon ferme et sécurisée par rapport à la sortie du second conduit (5) et qui est configuré pour produire des seconds signaux de température de sortie qui sont indicatifs de la température du second fluide, dans lequel le second capteur d'écoulement (11), le second capteur d'entrée (9) et le second capteur de sortie (10) sont couplés en termes de communication au système de commande (12, 19, 22),
le procédé comprenant de façon additionnelle les étapes constituées par :

la lecture, par le système de commande (12, 19, 22), de seconds signaux d'écoulement en provenance du second capteur d'écoulement (11) et de seconds signaux de température d'entrée en provenance du second capteur d'entrée (9) et de seconds signaux de température de sortie en provenance du second capteur de sortie (10);
la production, par le système de commande (12, 19, 22), de valeurs d'énergie thermique échangée ($Q_{4/5}$) dans l'échangeur d'énergie thermique (1) entre le premier fluide et le second fluide à partir des seconds signaux d'écoulement et à partir des seconds signaux de température d'entrée et à partir des seconds signaux de température de sortie; et

l'enregistrement, dans le système de commande (12, 19, 22), d'une pluralité de jeux de données de mesure, chacun des jeux de données de mesure incluant, pour un point temporel différent, des valeurs d'écoulement ($\varphi_{4/5}$) des premier et second fluides et une valeur de l'énergie thermique échangée ($Q_{4/5}$) qui est produite par le système de commande (12, 19, 22) et une valeur d'un degré de déshumidification (DHu) du second fluide.

**8.** Le procédé selon l'une quelconque des revendications 6 et 7, dans lequel une connexion avec un filtre à annulation de bruit couple en termes de communication le second capteur d'écoulement (11) au système de commande (12, 19, 22),

le procédé comprenant de façon additionnelle les étapes constituées par :

la lecture, par le filtre à annulation de bruit, de seconds signaux d'écoulement en provenance du second capteur d'écoulement (11) et l'annulation, par ce même filtre, de seconds signaux d'écoulement qui sont indicatifs d'un écoulement de zéro ou d'un écoulement en deçà d'un seuil prédéterminé pour l'écoulement; et la lecture, par le système de commande (12, 19, 22), de seconds signaux d'écoulement qui traversent le filtre à annulation de bruit.

**9.** Le procédé selon l'une quelconque des revendications 6 à 8, dans lequel une connexion à trois voies avec un filtre à trois voies couple en termes de communication le second capteur d'entrée (9) et le second capteur de sortie (10) au système de commande (12, 19, 22),

le procédé comprenant de façon additionnelle les étapes constituées par :

la lecture, par le filtre à trois voies, de seconds signaux de température d'entrée en provenance du second capteur d'entrée (9) et de seconds signaux de température de sortie en provenance du second capteur de sortie (10) et la formation, par ce même filtre, de jeux de signaux, chaque jeu comprenant un second signal de température d'entrée lu et un second signal de température de sortie lu, et l'annulation, par ce même filtre, de jeux de signaux au sein desquels le premier signal de température d'entrée lu et le second signal de température d'entrée lu diffèrent de moins qu'un seuil prédéterminé pour une température différentielle; et la lecture, par le système de commande (12, 19, 22), de seconds signaux d'entrée et de seconds signaux de sortie qui traversent le filtre à trois voies.

**10.** Le procédé selon l'une quelconque des revendications 1 à 9, dans lequel le premier conduit (4) comprend une entrée et une sortie et dans lequel le premier fluide s'écoule dans le premier conduit (4) depuis l'entrée jusqu'à la sortie, dans lequel le second conduit (5) comprend une entrée et une sortie et dans lequel le second fluide s'écoule dans le second conduit (5) depuis l'entrée jusqu'à la sortie, dans lequel l'échangeur d'énergie thermique (1) comprend un premier capteur d'écoulement (8) qui est fixé de façon ferme et sécurisée par rapport au premier conduit (4) et qui est configuré pour produire des premiers signaux d'écoulement qui sont indicatifs de l'écoulement du premier fluide dans le premier conduit (4) et un second capteur d'écoulement (11) qui est fixé de façon ferme et sécurisée par rapport au second conduit (5) et qui est configuré pour produire des seconds signaux d'écoulement qui sont indicatifs de l'écoulement du second fluide dans le second conduit (5), et un premier capteur d'entrée (6) qui est fixé de façon ferme et sécurisée par rapport à l'entrée du premier conduit (4) et qui est configuré pour produire des premiers signaux de température d'entrée qui sont indicatifs de la température du premier fluide, et un second capteur d'entrée (9) qui est fixé de façon ferme et sécurisée par rapport à l'entrée du second conduit (5) et qui est configuré pour produire des seconds signaux de température d'entrée qui sont indicatifs de la température du second fluide, et un second capteur de sortie (10) qui est fixé de façon ferme et sécurisée par rapport à la sortie du second conduit (5) et qui est configuré pour produire des seconds signaux de température de sortie qui sont indicatifs de la température du second fluide, dans lequel le second capteur d'écoulement (11), le premier capteur d'entrée (6), le second capteur d'entrée (9) et le second capteur de sortie (10) sont couplés en termes de communication au système de commande (12, 19, 22),

le procédé comprenant de façon additionnelle les étapes constituées par :

la lecture, par le système de commande (12, 19, 22), de premiers signaux d'écoulement en provenance du premier capteur d'écoulement (8) et de seconds signaux d'écoulement en provenance du second capteur d'écoulement (11) et de premiers signaux de température d'entrée en provenance du premier capteur d'entrée (6) et de seconds signaux de température d'entrée en provenance du second capteur d'entrée (9) et de seconds signaux de température de sortie en provenance du second capteur de sortie (10); la production, par le système de commande (12, 19, 22), de valeurs d'écoulement ($\varphi_{4/5}$) des premier et second fluides à partir des premiers signaux d'écoulement et à partir des seconds signaux d'écoulement et la production, par ce même système de commande, de valeurs d'énergie thermique échangée ($Q_{4/5}$) dans l'échangeur d'énergie thermique (1) entre le premier fluide et le second fluide à partir des seconds signaux d'écoulement et à partir des seconds signaux de température d'entrée et à partir des seconds signaux de température de sortie et la production, par ce même système de commande, de valeurs de température (TFI) du premier fluide à partir des premiers signaux de température d'entrée; et

l'enregistrement, dans le système de commande (12, 19, 22), d'une pluralité de jeux de données de mesure, chacun des jeux de données de mesure incluant, pour un point temporel différent, des valeurs d'écoulement ($\varphi_{4/5}$) qui sont produites par le système de commande (12, 19, 22) et une valeur de l'énergie thermique échangée ($Q_{4/5}$) qui est produite par le système de commande (12, 19, 22) et une valeur de température (TFI) qui est produite par le système de commande (12, 19, 22) et une valeur d'un degré de déshumidification (DHu) du second fluide.

11. Le procédé selon l'une quelconque des revendications 1 à 10, dans lequel le second conduit (5) comprend une entrée et une sortie et dans lequel le second fluide s'écoule dans le second conduit (5) depuis l'entrée jusqu'à la sortie, dans lequel l'échangeur d'énergie thermique (1) comprend un premier capteur d'écoulement (8) qui est fixé de façon ferme et sécurisée par rapport au premier conduit (4) et qui est configuré pour produire des premiers signaux d'écoulement qui sont indicatifs de l'écoulement du premier fluide dans le premier conduit (4) et un second capteur d'écoulement (11) qui est fixé de façon ferme et sécurisée par rapport au second conduit (5) et qui est configuré pour produire des seconds signaux d'écoulement qui sont indicatifs de l'écoulement du second fluide dans le second conduit (5), et un second capteur d'entrée (9) qui est fixé de façon ferme et sécurisée par rapport à l'entrée du second conduit (5) et qui est configuré pour produire des seconds signaux de température d'entrée qui sont indicatifs de la température du second fluide, et un second capteur de sortie (10) qui est fixé de façon ferme et sécurisée par rapport à la sortie du second conduit (5) et qui est configuré pour produire des seconds signaux de température de sortie qui sont indicatifs de la température du second fluide, et un second capteur d'humidité (9; 10) qui est fixé de façon ferme et sécurisée par rapport au second conduit (5) et qui est configuré pour produire des seconds signaux d'humidité qui sont indicatifs de l'humidité du second fluide dans le second conduit (5), dans lequel le second capteur d'écoulement (11), le second capteur d'entrée (9), le second capteur de sortie (10) et le second capteur d'humidité sont couplés en termes de communication au système de commande (12, 19, 22),

le procédé comprenant de façon additionnelle les étapes constituées par :

la lecture, par le système de commande (12, 19, 22), de premiers signaux d'écoulement en provenance du premier capteur d'écoulement (8) et la lecture, par ce même système de commande, de seconds signaux d'écoulement en provenance du second capteur d'écoulement (11) et de seconds signaux de température d'entrée en provenance du second capteur d'entrée (9) et de seconds signaux de température de sortie en provenance du second capteur de sortie (10) et de seconds signaux d'humidité en provenance du second capteur d'humidité (6);

la production, par le système de commande (12, 19, 22), de valeurs d'écoulement ($\varphi_{4/5}$) des premier et second fluides à partir des premiers signaux d'écoulement et à partir des seconds signaux d'écoulement et la production, par ce même système de commande, de valeurs d'énergie thermique échangée ($Q_{4/5}$) dans l'échangeur d'énergie thermique (1) entre le premier fluide et le second fluide à partir des seconds signaux d'écoulement et à partir des seconds signaux de température d'entrée et à partir des seconds signaux de température de sortie et la production, par ce même système de commande, de valeurs qui sont indicatives d'un degré de déshumidification (DHu) à partir des seconds signaux d'humidité; et

l'enregistrement, dans le système de commande (12, 19, 22), d'une pluralité de jeux de données de mesure, chacun des jeux de données de mesure incluant, pour un point temporel différent, des valeurs d'écoulement ($\varphi_{4/5}$) qui sont produites par le système de commande (12, 19, 22) et une valeur de l'énergie thermique échangée ($Q_{4/5}$) qui est produite par le système de commande (12, 19, 22) et une valeur d'un degré de déshumidification (DHu) qui est produite par le système de commande (12, 19, 22).

12. Produit de programme informatique comprenant un support non transitoire pouvant être lu par un ordinateur qui comporte, stocké sur lui, un code de programme informatique qui est configuré pour commander un processeur d'un système de commande (12, 19, 22) pour faire fonctionner un échangeur d'énergie thermique (1) pour échanger de l'énergie thermique entre un premier fluide qui s'écoule au travers de l'échangeur d'énergie thermique (1) dans un premier conduit (4) et un second fluide qui s'écoule au travers de l'échangeur d'énergie thermique (1) dans un second conduit (5),

le processeur réalisant les étapes qui suivent:

l'enregistrement, dans un système de commande (12, 19, 22), d'une pluralité de jeux de données de mesure, chacun des jeux de données de mesure incluant, pour un point temporel différent, des valeurs d'écoulement ($\varphi_{4/5}$) des premier et second fluides et une valeur d'un degré de déshumidification (DHu) du second fluide;

le calcul, par le système de commande (12, 19, 22), pour chacun des jeux de données de mesure, de valeurs d'écoulement normalisées ($\varphi_{norm,4/5}$) en tant que fonctions des valeurs d'écoulement ($\varphi_{4/5}$) du jeu de données de mesure, et l'association, par ce même système de commande, des valeurs d'écoulement normalisées avec le jeu de données de mesure;

le calcul, par le système de commande (12, 19, 22), pour chacun des jeux de données de mesure, d'au moins une variable de normalisation (DHu$_{max,ideal}$) en tant que fonction du degré de déshumidification (DHu) du jeu de données de mesure, et l'association, par ce même système de commande, de l'au moins une variable de normalisation (DHu$_{max,ideal}$) avec le jeu de données de mesure;

le calcul, par le système de commande (12, 19, 22), pour chacun des jeux de données de mesure, d'une valeur d'efficacité d'échangeur thermique (HXeff) en rapportant la valeur du degré de déshumidification (DHu) du jeu de données de mesure à l'au moins une variable de normalisation (DHu$_{max,ideal}$) qui est associée avec le jeu de données de mesure, et l'association, par ce même système de commande, de l'efficacité d'échangeur thermique (HXeff) avec le jeu de données de mesure;

le calcul, par le système de commande (12, 19, 22), pour chacun des jeux de données de mesure, de points de données normalisés ($\varphi_{norm,4/5}$, HXeff) qui sont définis par les valeurs d'écoulement normalisé ($\varphi_{norm,4/5}$) qui sont associées avec le jeu de données de mesure et par la valeur d'efficacité d'échangeur thermique (HXeff) qui est associée avec le jeu de données de mesure; et

la détermination, par le système de commande (12, 19, 22), pour l'échangeur d'énergie thermique (1), d'une fonction de transfert caractéristique (37) qui épouse par ajustement les points de données normalisés ($\varphi_{norm,4/5}$, HXeff).

13. Le produit de programme informatique selon la revendication 12, dans lequel des données psychrométriques sont stockées sur le support non transitoire pouvant être lu par un ordinateur et dans lequel le second conduit (5) comprend une entrée et une sortie et dans lequel le second fluide s'écoule dans le second conduit (5) depuis l'entrée jusqu'à la sortie,

le processeur réalisant les étapes additionnelles qui suivent:

l'enregistrement, dans un système de commande (12, 19, 22), d'une pluralité de jeux de données de mesure, chacun des jeux de données de mesure incluant, pour un point temporel différent, des valeurs d'écoulement ($\varphi_{4/5}$) des premier et second fluides et une valeur de l'énergie thermique échangée (Q$_{4/5}$) entre le premier fluide et le second fluide et une valeur de la température d'entrée (TIn) et une valeur de la température de sortie (TOut) et une valeur d'un degré de déshumidification (DHu) du second fluide; et

l'utilisation, par le système de commande (12, 19, 22), pour chacun des jeux de données de mesure, des données psychrométriques (39 - 46) afin de calculer l'au moins une variable de normalisation (Q$_{max,ideal}$, Q$_{max,est}$, DHu$_{max,ideal}$) en tant que fonction des valeurs d'écoulement ($\varphi_{4/5}$) du jeu de données de mesure et en tant que fonction de la valeur de la température d'entrée (TIn) du jeu de données de mesure et en tant que fonction de la valeur de la température de sortie (TOut) du jeu de données de mesure et l'association, par ce même système de commande, de l'au moins une variable de normalisation (Q$_{max,ideal}$, Q$_{max,est}$, DHu$_{max,ideal}$) avec le jeu de données de mesure.

14. Le produit de programme informatique selon l'une quelconque des revendications 12 et 13, dans lequel une valeur de seuil d'écoulement prédéfinie est stockée sur le support non transitoire pouvant être lu par un ordinateur,

le processeur réalisant les étapes additionnelles qui suivent:

la comparaison, par le système de commande (12, 19, 22), pour chaque jeu de données de mesure, de chacune des valeurs d'écoulement ($\varphi_{4/5}$) avec la valeur de seuil d'écoulement prédéfinie; et

l'annulation, par le système de commande (12, 19, 22), de chaque jeu de données de mesure au sein duquel au moins l'une des valeurs d'écoulement ($\varphi_{4/5}$) est en-deçà de la valeur de seuil d'écoulement prédéfinie.

15. Le produit de programme informatique selon l'une quelconque des revendications 12 à 14, dans lequel une valeur de seuil de transfert d'énergie thermique prédéfinie est stockée sur le support non transitoire pouvant être lu par un ordinateur,

le processeur réalisant les étapes additionnelles qui suivent:

la comparaison, par le système de commande (12, 19, 22), pour chaque jeu de données de mesure, de la valeur de l'énergie thermique échangée ($Q_{4/5}$) avec la valeur de seuil de transfert d'énergie thermique prédéfinie; et

l'annulation, par le système de commande (12, 19, 22), de chaque jeu de données de mesure au sein duquel la valeur de l'énergie thermique échangée ($Q_{4/5}$) est en-deçà de la valeur de seuil de transfert d'énergie thermique prédéfinie.

FIG 1

FIG 2

FIG 3

FIG 4

EP 3 489 591 B1

## REFERENCES CITED IN THE DESCRIPTION

### Patent documents cited in the description

- WO 2017036674 A1
- WO 2013034358A1 A1
- WO 2013034358 A1
- WO 2014183868 A2
- CH 0097513

### Non-patent literature cited in the description

- improving campus chilled water systems with intelligent control valves: a field study. **G HENZE ; W HENRY ; M THUILLARD.** Architectural Engineering Conference. State College of Pennsylvania, 03 April 2013
- **B SESHADRI ; V PARTENAY ; E BLONKOWSKI ; N JADHAV ; M THUILLARD ; S MISCHLER ; F REIDER.** optimization of chilled water systems using a Belimo energy valve™: a case study in the tropics. Energy Research Institute of Nanyang Technological University, 2015